# EUROPEAN PATENT SPECIFICATION

(11) **EP 2 118 231 B1**
(45) Date of publication and mention of the grant of the patent: **17.05.2017**
(21) Application number: 07863120.7
(22) Date of filing: 19.12.2007
(51) Int. Cl.: C09K 5/04, F25B 9/00, F25B 41/06, F25B 45/00

(54) **SYSTEMS AND METHOD USING FLUORINATED COMPOSITIONS**
SYSTEME UND VERFAHREN DIE VON FLUORHALTIGEN ZUSAMMENSETZUNGEN GEBRAUCH MACHEN
SYSTÈMES ET PROCÉDÉ UTILISANT DES COMPOSITIONS FLUORÉES

(30) Priority: 23.12.2006 US 871818 P; 18.05.2007 US 938882 P
(43) Date of publication of application: 18.11.2009
(73) Proprietor: The Chemours Company FC, LLC, Wilmington DE 19801 (US)
(72) Inventor: BIVENS, Donald Bernard, Kennett Square, Pennsylvania 19348 (US); LECK, Thomas J., Hockessin, Delaware 19707 (US)
(74) Representative: Matthews, Derek Peter
(86) International application number: PCT/US2007/025957
(87) International publication number: WO 2008/079234

(56) References cited:
- EP-A- 0 659 862
- WO-A-00/56834
- WO-A-01/23493
- US-A- 3 866 430
- US-B1- 6 393 851
- US-B1- 6 460 358
- ANONYMOUS: "Retrofit Guidelines for DuPont ISCEON 9 Series Refrigerants: DuPont ISCEON MO29 (R-422D)" INTERNET CITATION, [Online] 1 November 2006 (2006-11-01), pages 1-12, XP002485414 Retrieved from the Internet: URL:http://web.archive.org/web/20061101042 336/http://refrigerants.dupont. com/Suva/en_US/pdf/k10942.pdf> [retrieved on 2008-06-17]

## Description

### FIELD OF THE INVENTION

This invention relates to heat transfer systems utilising compositions comprising difluoromethane, pentafluoroethane, and 1,1,1,2-tetrafluoroethane with mixtures of n-butane and isopentane.

### BACKGROUND OF THE INVENTION

Fluorinated hydrocarbons have many uses, one of which is as a heat transfer composition used in air conditioners, heat pumps, water chillers, and refrigeration applications.

Fully and partially halogenated chlorofluorocarbons (e.g., widely used chlorodifluoromethane, R22) have been implicated in various concerns over the ozone layer destruction. Consequently, their use and production is being limited.

Accordingly, heat transfer compositions that have zero ozone depletion potential while still achieving an acceptable performance in refrigeration, air conditioning, water chillers and heat pump applications designed for R22 are needed.

In addition to the heat transfer and environment characteristics of any heat transfer composition, compositions that have suitable compatibility with common compressor lubricants, for example, mineral oils (e.g., Sunoco's Suniso 3GS oil among other oils designed for lubricating compressors) and alkylbenzenes, which have been conventionally used as lubricants in chlorofluorocarbon-based (CFC) and/or hydrochlorofluorocarbon-based (HCFC) refrigeration systems are also desired.

However, the lack of solubility of these lubricants in the replacement, non-ozone depleting, hydrofluorocarbon (HFC) refrigerants has precluded HFC use and necessitated development and use of alternative lubricants for HFC heat transfer compositions. The alternative lubricants have beem primarily based on polyalkylene glycols (PAGs) and polyol esters (POEs). While the PAGs and POEs are suitable lubricants for HFC based heat transfer compositions, many PAGs and POEs are extremely hygroscopic and can absorb several thousand ppm (parts per million) of water on exposure to moist air. This absorbed moisture leads to problems in the equipment, such as formation of acids which result in corrosion of the equipment components and formation of intractable sludges.

In contrast to POEs and PAGs, mineral oils and alkylbenzenes are much less hygroscopic and have low solubility, less than 100 ppm, for water. Thusly, there is a need for HFC compositions that may utilize mineral oil and alkylbenzene lubricants.

Moreover, in some equipment, heat transfer composition may be lost during equipment operation through leaks in shaft seals, hose connections, soldered joints and broken lines or during equipment repair and maintenance resulting in the heat transfer composition being released into the atmosphere. If the heat transfer composition in the equipment is not a pure component, an azeotropic or azeotrope-like composition, the heat transfer composition may change when leaked or discharged to the atmosphere from the equipment. Changes in the composition may cause the heat transfer composition to become flammable or to have reduced cooling capacity. In addition to having the previously described properties, it is also desired to have a heat transfer composition that: is capable of being an R22 replacement refrigerant requiring minimal equipment changes; is at least azeotrope-like in behavior; possess an acceptable global warming potential; be sufficiently low in toxicity; possess sufficient mineral oil compatibility; possess good oil return properties when in use; possess acceptable energy efficiencies, while maintaining comparable cooling capacity as compared to R22.

WO 00/56834 discloses azeotrope-like compression refrigerant compositions consisting essentially of difluoromethane (HFC-32), pentafluoroethane (HFC-125), 1,1,1,2-tetrafluoroethane (HFC-134a) and 0.5-5 weight percent of a hydrocarbon selected from the group consisting of: n-butane; isobutane; n-butane and 2-methylbutane; n-butane and n-pentane; isobutane and 2-methylbutane; and isobutane and n-pentane.

The document "Retrofit Guidelines for DuPont ISCEON 9 Series Refrigerants: DuPont ISCEON MO29 (R-422D)" discloses how to retrofit refigeration systems designed for use with R-22 in order to use R-422D (HFC-134a, HFC-125 and isobutane).

U.S. Patent No. 6,393,851 B1, U.S. Patent No. 6,460,358 B1 and U.S. Patent No. 3,866,430 disclose vapor compression heat transfer systems including a sensor system coupled to the evaporator and an expansion valve.

### DESCRIPTION OF INVENTION

The invention utilises compositions having the following components, as expressed in weight percent, and such that the total adds up to 100%, including any additives.
7.0-9.0 % wt. R32 [difluoromethane, CH₂F₂, having a normal boiling point of -51.7°C];
39.0-50.0 % wt. R125 [pentafluoroethane, CF₃CHF₂, having a normal boiling point of -48.5°C];
39.0 - 50.0 % wt R134a [1, 1, 1, 2 tetrafluoroethane, CF₃CHF₂, normal boiling point of -26.1 °C];
1.9 to 2.5 % wt hydrocarbon, which consists essentially of
1.5 -1.8 % wt R600 [n-butane, CH₃CH₂CH₂CH₃, normal boiling point of -0.5°C], and
0.4 - 0.7 % wt R601 a [isopentane, ((CH₃)₂CHCH₂CH₃, having normal boiling point of +27.8°C] or R601 [n-pentane (CH₃CH₂CH₂ CH₂CH₃, having a normal boiling point of +36°C)]. The calculated global warming potential (GWP) of these compositions are from about 1800 to about 2000.

In some embodiments, the compositions have the following components, as expressed in weight percent.
7.0-9.0 % wt. R32 ;
42.0-49.0% wt. R125;
42.0-49.0 % wt R134a;
1.9 - 2.5 % wt hydrocarbon which consists essentially of 1.5 -1.8 % wt R600 and 0.4-0.7 % wt R601 a or 0.4-0.7 % wt R601.

In some embodiments, the compositions have the following components, as expressed in weight percent.
7.0-9.0 % wt. R32 ;
43.5-47.5 % wt. R125;
42.7- 45.7 % wt R134a;
1.9 - 2.5 % wt hydrocarbon which consists essentially of 1.5 -1.8 % wt R600 and 0.4 - 0.7 % wt R601a or 0.4-0.7% wt R601.

In some embodiments, the compositions have the following components, as expressed in weight percent.
7.0-9.0 % wt. R32 ;
43.5-47.5% wt. R125;
42.7- 45.7 % wt. R134a; 2.1 - 2.5 % wt. hydrocarbon which consists essentially
of 1.5 -1.8 % wt R600 and 0.4 - 0.7 % wt R601 a or 0.4-0.7% wt R601.

Also, disclosed are refrigerators, freezers, air conditioners, water chillers, and heat pumps currently having a sensing element having a fluid suitable for use in the sensing element, when R22 is used in the condenser-to-evaporator circuit, and one of the above described compositions as the circulating heat transfer composition in the condenser-to-evaporator circuit of the system. In some embodiments of a sensing element, the fluid suitable for use in the sensing element when R22 is used in the condenser-to-evaporator circuit, is a fluid or fluid mixture which has a pressure equal to or lower than R22. In some embodiments of a sensing element, the fluid suitable for use in the sensing element when R22 is used in the condenser-to-evaporator circuit, is a fluid or fluid mixture which has a pressure equal to or higher than R22. In some embodiments, wherein the fluid in the at least one sensing element is a fluid or fluid mixture selected to work when R22 is in the condenser-to-evaporator circuit, has a slope of a pressure/temperature relation that is substantially different from that of R22. In some embodiments, the fluid in the sensing element which is selected to work when R22 is in the condenser-to-evaporator circuit is R22. In some embodiments, one of the above described compositions is used in the sensing element and one of the above described compositions is used in the condenser-to-evaporator circuit.

Currently, many refrigeration and air conditioning systems use R22 in both the sensing element coupled to the expansion valve, and as well as the "condenser-to-evaporator circuit" of the refrigeration and air conditioning systems. The term "condenser-to-evaporator circuit" is a term used to describe that portion of a heat transfer system that includes all of the system elements and components in fluid communication together from the expansion valve to the evaporator through to the condenser and all conduits and other elements that may be in fluid communication between the expansion valve and the condenser. However, the term "condenser-to-evaporator circuit" excludes the sensing element.

Additives that may optionally be added include those such as lubricants, corrosion inhibitors, surfactants, anti-foam agents (e.g., Dow 200), solvents (e.g., Exxon's Isopar H) stabilizers, oil return agents (including polymeric oil return agents), dyes and other appropriate materials may be added to the described compositions.
The compositions as disclosed here may further comprise at lease one lubricant selected from the group consisting of polyalkylene glycols, polyol esters, polyvinylethers, mineral oils, alkylbenzenes, synthetic paraffins, synthetic napthenes, and poly(alpha)olefins.

Lubricants of the present invention comprise those suitable for use with refrigeration or air-conditioning apparatus. Among these lubricants are those conventionally used in vapor compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21, herein incorporated by reference. Lubricants of the present invention may comprise those commonly known as "mineral oils" in the field of compression refrigeration lubrication. Mineral oils comprise paraffins (i.e. straight-chain and branched-carbon-chain, saturated hydrocarbons), naphthenes (i.e. cyclic paraffins) and aromatics (i.e. unsaturated, cyclic hydrocarbons containing one or more rings characterized by alternating double bonds). Lubricants of the present invention further comprise those commonly known as "synthetic oils" in the field of compression refrigeration lubrication. Synthetic oils comprise alkylaryls (i.e. linear and branched alkyl alkylbenzenes), synthetic paraffins and naphthenes, and poly(alphaolefins). Representative conventional lubricants of the present invention are the commercially available BVM 100 N (paraffinic mineral oil sold by BVA Oils), Suniso® 3GS and Suniso® 5GS (naphthenic mineral oil sold by Crompton Co.), Sontex® 372LT (naphthenic mineral oil sold by Pennzoil), Calumet® RO-30 (naphthenic mineral oil sold by Calumet Lubricants), Zerol® 75, Zerol® 150 and Zerol® 500 (linear alkylbenzenes sold by Shrieve Chemicals) and HAB 22 (branched alkylbenzene sold by Nippon Oil).

Lubricants of the present invention further comprise those, which have been designed for use with hydrofluorocarbon refrigerants and are miscible with refrigerants of the present invention under compression refrigeration and air-conditioning apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol® 100 (Castrol, United Kingdom), polyalkylene glycols (PAGs) such as RL-488A from Dow (Dow Chemical, Midland, Michigan), polyvinyl ethers (PVEs), and polycarbonates (PCs) such as MA2320F from Mitsui.

Lubricants of the present invention are selected by considering a given compressor's requirements and the environment to which the lubricant will be exposed.

In some embodiments, the compositions may further include one or more additives (e.g., compatibilizers or UV dyes) in an amount of up to 10% by weight of the compositions described above. In other embodiments, one or more additives are present in the above described compositions in an amount of less than 500 ppm in the composition. In other embodiments, one or more additives are present in the above described compositions in an amount of less than 250 ppm in the composition. In other embodiments, one or more additives are present in the above described compositions in an amount of less than 200 ppm in the composition.

In other embodiments, one or more additives may be in the composition in an amount of from 0.1 to 3 % weight. In other embodiments, one or more additives may be in the composition in an amount of from 0.01 to 1.5 % weight.

In some embodiments, the present invention provides perfluoropolyethers as an additive which is miscible with hydrofluorocarbon and hydrocarbon refrigerants or heat transfer fluids. A common characteristic of perfluoropolyethers is the presence of perfluoroalkyl ether moieties. Perfluoropolyether is synonymous to perfluoropolyalkylether. Other synonymous terms frequently used include "PFPE", "PFAE", "PFPE oil", "PFPE fluid", and "PFPAE". For example, KRYTOX available from DuPont is a perfluoropolyether having the formula of CF₃-(CF₂)₂-O-[CF(CF₃)-CF₂-O]j'-R'f. In the formula, j' is 2 - 100, inclusive and R'f is CF₂CF₃, a C3 to C6 perfluoroalkyl group , or combinations thereof.

Other PFPEs including the FOMBLIN and GALDEN fluids, available from Ausimont, Milan, Italy and produced by perfluoroolefin photooxidation, can also be used. FOMBLIN-Y can have the formula of CF₃O(CF₂CF(CF₃)-O-)_{m'}(CF₂-O-)_{n'}-R_{1f}. Also suitable is CF₃O[CF₂CF(CF₃)O]_{m'}(CF₂CF₂O)_{o'}(CF₂O)_{n'}-R_{1f}. In the formulae R_{1f} is CF₃, C₂F₅, C₃F₇, or combinations of two or more thereof; (m' + n') is 8 - 45, inclusive; and m/n is 20 - 1000, inclusive; o' is 1; (m'+n'+o') is 8 - 45, inclusive; m'/n' is 20 - 1000, inclusive.

FOMBLIN-Z can have the formula of CF₃O(CF₂CF₂-O-)_{p'}(CF₂-O)_{q'}CF₃ where (p' + q') is 40 - 180 and p'/q' is 0.5 - 2, inclusive.

DEMNUM fluids, another family of PFPE available from Daikin Industries, Japan, can also be used. It can be produced by sequential oligomerization and fluorination of 2,2,3,3-tetrafluorooxetane, yielding the formula of F-[(CF₂)₃-O]_{t'}-R_{2f} where R_{2f} is CF₃, C₂F₅, or combinations thereof and t' is 2 - 200, inclusive.

The two end groups of the perfluoropolyether, independently, can be functionalized or unfunctionalized. In an unfunctionalized perfluoropolyether, the end group can be branched or straight chain perfluoroalkyl radical end groups. Examples of such perfluoropolyethers can have the formula of C_{r'}F_{(2r'+1)}-A-C_{r'}F_{(2r'+1)} in which each r' is independently 3 to 6; A can be O-(CF(CF₃)CF₂-O)_{w'}, O-(CF₂-O)_{x'}(CF₂CF₂-O)_{y'}, O-(C₂F₄-O)_{w'}, O-(C₂F₄-O)_{x'}(C₃F₆-O)_{y'}, O-(CF(CF₃)CF₂-O)_{x'}(CF₂-O)_{y'}, O-(CF₂CF₂CF₂-O)_{w'}, O-(CF(CF₃)CF₂-O)_{x'}(CF₂CF₂-O)_{y'}-(CF₂-O)_{z'}, or combinations of two or more thereof; preferably A is O-(CF(CF₃)CF₂-O)_{w'}, O-(C₂F₄-O)_{w'}, O-(C₂F₄-O)_{x'}(C₃F₆-O)_{y'}, O-(CF₂CF₂CF₂-O)_{w'}, or combinations of two or more thereof; w' is 4 to 100; x' and y' are each independently 1 to 100. Specific examples include, but are not limited to, F(CF(CF₃)-CF₂-O)₉-CF₂CF₃, F(CF(CF₃)-CF₂-O)₉-CF(CF₃)₂, and combinations thereof. In such PFPEs, up to 30% of the halogen atoms can be halogens other than fluorine, such as, for example, chlorine atoms.

The two end groups of the perfluoropolyether, independently, can also be functionalized. A typical functionalized end group can be selected from the group consisting of esters, hydroxyls, amines, amides, nitriles, carboxylic acids and sulfonic acids

Representative ester end groups include -COOCH₃, -COOCH₂CH₃,-CF₂COOCH₃, -CF₂COOCH₂CH₃, -CF₂CF₂COOCH₃, -CF₂CF₂COOCH₂CH₃,-CF₂CH₂COOCH₃, -CF₂CF₂CH₂COOCH₃, -CF₂CH₂CH₂COOCH₃,-CF₂CF₂CH₂CH₂COOCH₃.

Representative hydroxyl end groups include -CF₂OH, -CF₂CF₂OH,-CF₂CH₂OH,-CF₂CF₂CH₂OH, -CF₂CH₂CH₂OH, -CF₂CF₂CH₂CH₂OH.

Representative amine end groups include -CF₂NR¹R²,-CF₂CF₂NR¹R², -CF₂CH₂NR¹R², -CF₂CF₂CH₂NR¹R², -CF₂CH₂CH₂NR¹R²,-CF₂CF₂CH₂CH₂NR¹R², wherein R¹ and R² are independently H, CH₃, or CH₂CH₃.

Representative amide end groups include -CF₂C(O)NR¹R²,-CF₂CF₂C(O)NR¹R², -CF₂CH₂C(O)NR¹R², -CF₂CF₂CH₂C(O)NR¹R²,-CF₂CH₂CH₂C(O)NR¹R², -CF₂CF₂CH₂CH₂C(O)NR¹R², wherein R¹ and R² are independently H, CH₃, or CH₂CH₃.

Representative nitrile end groups include -CF₂CN, -CF₂CF₂CN,-CF₂CH₂CN,-CF₂CF₂CH₂CN, -CF₂CH₂CH₂CN, -CF₂CF₂CH₂CH₂CN.

Representative carboxylic acid end groups include -CF₂COOH,-CF₂CF₂COOH, -CF₂CH₂COOH, -CF₂CF₂CH₂COOH, -CF₂CH₂CH₂COOH,-CF₂CF₂CH₂CH₂COOH.

Representative sulfonic acid end groups include -S(O)(O)OR³,-S(O)(O)R⁴, -CF₂O S(O)(O)OR³, -CF₂CF₂O S(O)(O)OR³, -CF₂CH₂O S(O)(O)OR³,-CF₂CF₂CH₂O S(O)(O)OR³, -CF₂CH₂CH₂O S(O)(O)OR³,-CF₂CF₂CH₂CH₂O S(O)(O)OR³, -CF₂ S(O)(O)OR³, -CF₂CF₂ S(O)(O)OR³,-CF₂CH₂ S(O)(O)OR³,-CF₂CF₂CH₂ S(O)(O)OR³, -CF₂CH₂CH₂ S(O)(O)OR³, -CF₂CF₂CH₂CH₂ S(O)(O)OR³, -CF₂O S(O)(O)R⁴, -CF₂CF₂O S(O)(O)R⁴,-CF₂CH₂O S(O)(O)R⁴,-CF₂CF₂CH₂O S(O)(O)R⁴, -CF₂CH₂CH₂O S(O)(O)R⁴, -CF₂CF₂CH₂CH₂O S(O)(O)R⁴, wherein R³ is H, CH₃, CH₂CH₃, CH₂CF₃, CF₃, or CF₂CF₃, R⁴ is CH₃, CH₂CH₃, CH₂CF₃, CF₃, or CF₂CF₃.

The refrigerant-perfluoropolyether additive combination of this invention improves performance of refrigeration, air conditioning and heat transfer systems in one or more aspects. In one aspect, it enables adequate oil return to the compressor such that oil levels are maintained at the proper operating level by preventing accumulation of oil in the heat exchanger coils. In another aspect, the refrigerant-perfluoropolyether may also improve lubrication performance of mineral oil and synthetic lubricant oils. In yet another aspect, the refrigerant-perfluoropolyether also improves heat transfer efficiency and thus the energy efficiency. The refrigerant-perfluoropolyether has also been shown to reduce friction and wear in boundary lubrication, which is expected to result in longer compressor life. The advantages listed above are not intended to be exhausting.

Reference to "an effective amount of perfluoropolyether" in this application means an amount of perfluoropolyether additive to provide sufficient oil return to the compressor in order to maintain or improve lubrication or energy efficiency performance or both, where said amount of perfluoropolyether is adjusted by one of ordinary skill to a level appropriate to the individual refrigeration/heat transfer system (coil, compressor, etc.) and refrigerant employed.

In one embodiment of this invention, the amount of perfluoropolyether is less than 40% by weight relative to the refrigerant or heat transfer fluid. In another embodiment, the amount of perfluoropolyether additive is less than about 20-30 wt.% relative to the refrigerant or heat transfer fluid. In yet another embodiment, the perfluoropolyether additive is less than about 10 wt.% relative to the refrigerant or heat transfer fluid. In yet another embodiment, the perfluoropolyether additive is less than about 1 to about 2 wt.% relative to the refrigerant or heat transfer fluid. In yet another embodiment, the perfluoropolyether additive is between about 0.01 wt.% and 1.0 wt.% relative to the refrigerant or heat transfer fluid. In yet another embodiment, the perfluoropolyether additive is between about 0.03 and 0.80 wt.% relative to the refrigerant or heat transfer fluid.

In addition, in some embodiments, polymeric oil return agents such as Zonyl®PHS (which may be purchased from the E.I. du Pont de Nemours and Company), which solubilize or disperse mineral or synthetic lubricants may be added.

The compositions described herein may be useful as refrigerants and in particular as R22 alternatives. They may also be useful as foam expansion agents (e.g., for polyolefins and polyurethane foams), solvents, cleaning agents, aerosol propellants, heat transfer media, gaseous dielectrics, power cycle working fluids, polymerization media, particulate removal compositions, carrier fluids, buffing abrasive agents and displacement drying agents.

In some embodiments, the compositions are considered to be substantially constant-boiling azeotrope-like compositions. "Azeotropic temperature" means the temperature at which the liquid and vapor phases of a blend have the same mole fraction of each component at equilibrium for a specified pressure."

"Azeotrope-like" composition is meant a constant boiling, or substantially constant boiling, liquid admixture of two or more substances that behaves as a single substance. One way to characterize an azeotrope-like composition is that the vapor produced by partial evaporation or distillation of the liquid has substantially the same composition as the liquid from which it was evaporated or distilled, that is, the admixture distills/refluxes without substantial composition change. Another way to characterize an azeotrope-like composition is that the bubble point vapor pressure and the dew point vapor pressure of the composition at a particular temperature are substantially the same.

In some embodiments, an azeotrope-like composition may be characterized in that after 50 weight percent of the composition is removed such as by evaporation or boiling off, the difference in vapor pressure between the original composition and the composition remaining after 50 weight percent of the original composition has been removed is less than about 10 percent, when measured in absolute units. By absolute units, it is meant measurements of pressure in, for example, psia, kilopascals, atmospheres, bars, torr, dynes per square centimeter, millimeters of mercury, inches of water and other equivalent terms well known in the art. If an azeotrope is present, there is no difference in vapor pressure between the original composition and the composition remaining after 50 weight percent of the original composition has been removed.

As used herein, compatibilizers are compounds which improve solubility of the hydrofluorocarbon refrigerants in conventional refrigeration lubricants and thus improve oil return to the compressor.

As used herein, "ultra-violet" dye is defined as a UV fluorescent composition that absorbs light in the ultra-violet or "near" ultra-violet region of the electromagnetic spectrum. The fluorescence produced by the UV fluorescent dye under illumination by a UV light that emits radiation with wavelength anywhere from about 10 nanometers to about 750 nanometers may be detected.

In some embodiments, compositions described herein have a Temperature Glide of from about 6 to about 9°F (3-5°C), when measured at the evaporator or the condenser. In some embodiments, the temperature glide measured at the evaporator is from about 5.8 to about 6.3°F (3.2-3.5°C). Temperature glide is a term used to define an absolute value of the difference between the starting and ending temperature of a phase-change process by a heat transfer composition within a component of a system (typically measured at the evaporator or the condenser), exclusive of any subcooling or superheating. In one embodiment, the composition has a saturated vapor pressure of about 40psig (275 kPa), in a system having an average evaporator temperature of about +20°F (-6.5°C).

As used herein, mobile refrigeration apparatus or mobile air-conditioning apparatus refers to any refrigeration or air-conditioning apparatus incorporated into a transportation unit for the road, rail, sea or air. In addition, apparatus, which are meant to provide refrigeration or air-conditioning for a system independent of any moving carrier, known as "intermodal" systems, are included in the present invention. Such intermodal systems include "containers" (combined sea/land transport) as well as "swap bodies" (combined road and rail transport). The compositions as disclosed herein may be useful in mobile applications including train passenger compartment air-conditioning, transport air-conditioning or refrigeration, rapid transport (subway) and bus air-conditioning.

As used herein, heat transfer compositions are compositions utilized to transfer, move or remove heat from one space, location, object or body to a different space, location, object or body by radiation, conduction, or convection. A heat transfer composition, may be a liquid or a gas fluid and may function as a secondary coolant by providing means of transfer for cooling (or heating) from a remote refrigeration (or heating) system. In some systems, the heat transfer compositions may remain in a constant state throughout the transfer process (i.e., not evaporate or condense). Alternatively, evaporative cooling processes may utilize heat transfer fluids as well.

As used herein, a heat source may be defined as any space, location, object or body from which it is desirable to transfer, move or remove heat. Examples of heat sources may be spaces (open or enclosed) requiring refrigeration or cooling, such as refrigerator or freezer cases in a supermarket, building spaces requiring air-conditioning, or the passenger compartment of an automobile requiring air-conditioning. A heat sink may be defined as any space, location, object or body capable of absorbing heat. A vapor compression refrigeration system is one example of such a heat sink.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Further in some embodiments the compositions described above are used in a process for producing refrigeration, comprising evaporating the above described compositions in the vicinity of a body to be cooled and then condensing said compositions away from the body to be cooled. In addition, the compositions described above may also be used to produce heat by condensing the above described compositions in the vicinity of a body to be heated, and thereafter evaporating said compositions away from the body to be heated.

### Systems Using the Above Compositions.

For purposes of the heat transfer systems described herein, the following definitions are used to define the terms.

A Temperature Controlled Zone means a space that is utilized to transfer, move, or remove heat from one space, location, object or body to a different space, location, object or body by radiation, conduction or convection and combinations thereof. For example, in some embodiments, the temperature-controlled zone is case, cabinet, room, enclosure or semi-enclosure. The temperature of such temperature controlled zones can have temperatures typical of a cooler, freezer, cooler, chiller, refrigerators, or a room or office heated by an air conditioner or heat pump.

In some embodiments, the Temperature Controlled Zone is selected from a refrigerator case, freezer case, cabinet, water chiller, drink chiller, wine chiller, deli case, bakery case, produce display case and combinations thereof. In some embodiments, the produce display case has a water mister and in other embodiments the produce display case does not have water mister. In some embodiments, the Temperature Controlled Zone, is a room, warehouse, laboratory, industrial manufacturing area (e.g., for computer equipment or chemical reactions) or simply a confined space (for example, a large tent having cooled or heated air inside) and combinations thereof.

In some embodiments, the Temperature Controlled Zone is case, room, chamber, or a cabinet having at least one door that may open from the top (such a freezer case). In some embodiments, the case, room, chamber, or a cabinet has at least one door that opens from one or more of its sides, including by one or more doors (such as a supermarket or convenient store display cases having multiple doors). In some embodiments, there are more than one Temperature Controlled Zone in the system. In some embodiments, the multiple zones have the same or different target temperatures.

The term "target" is a term used to describe a goal or a set point and is used in view of the fact that, when a system is in operation, the actual temperature of system components, such as the temperature controlled zones, the evaporators, or compressors, may vary over time for any number of reasons, including power outages, equipment malfunctions, start up and shut down procedures, the amount and temperature of the contents placed in such temperature controlled zone at any time.

Subcooling is a term used to define how far below its saturation temperature a liquid composition is cooled.

Superheat is a term used to define the how far above its saturation vapor temperature a vapor composition is heated.

Static superheat is a term used to define the amount of superheat required to open the expansion valve to allow liquid refrigerant to flow past the valve plug.

Capacity is a term used to describe the amount of heat that can be transferred, moved, removed, or rejected over time. One unit of measure of capacity is the number of British Thermal Units ("BTU") per hour. 12,000 BTU/ hour (3.5 kilowatt, kW) is also defined as 1 Ton of heating or cooling capacity.

Condenser is a term used to define the component of a system that condenses the vapor refrigerant to a liquid refrigerant. In some embodiments, at least one condenser is located remotely from at least one evaporator; in other embodiments, the distance between a condenser and an evaporator is at least 15 feet (5 metres); in other embodiments, the distance is more than 50 feet (15 metres).

The term "condenser-to-evaporator circuit" is a term used to describe that portion of a heat transfer system the includes all of the system elements and components in fluid communication together from the liquid refrigerant metering device to the evaporator through to the condenser and all conduits and other elements that may be in fluid communication between the liquid refrigerant metering device and the condenser. However, the term "condenser-to-evaporator circuit" excludes the sensing element.

A Compressor is a mechanical device that increases the pressure of a vapor by reducing its volume. Compression of a vapor naturally increases its temperature. In some embodiments, there are more than two compressors. In some embodiments with more than two compressors, the compressors are not of the same type. In some embodiments, the compressor utilizes an injection cooling feature. Injection cooling is a system that diverts some portion of the compressed refrigerant leaving the condenser back to the compressor to prevent overheating. In some embodiments, overheating of the compressor may lead to oil degradation that may ultimately result in early compressor failure (shorter compressor life). Some systems that utilize injection cooling lose cooling capacity and energy efficiency because not all the refrigerant compressed is going to the evaporator to provide the cooling of the temperature controlled zone (as define later herein).

There are many types of compressors useful in heat transfer systems described herein, and some embodiments may have one or more compressor. In some embodiments, the compressors may have the same power rating or different power ratings. In some embodiments, there are more than two compressors. In some embodiments with more than two compressors, the compressors are not of the same type. In some embodiments, a compressor can be hermetic or semi-hermetic.

In some embodiments, at least one compressor is located remotely from the condenser; in some embodiments, this distance is at least 15 feet (5 m); and in other embodiments, this distance is at least 50 feet (15 m).

In some embodiments, the individual compressors have a power capacity of from 1/5 horse power ("hp", where 1 hp = 746 W) to up to 500 hp (373 kW). In some embodiments, at least one compressor has a power capacity of from 1/5 hp (0.15 kW) to up to 50 hp (37 kW). In some embodiments the systems have more 5 or more than 5 compressors.

In some embodiments, the system has at least one compressor having a power rating of from 5 to 30 hp (3.7 to 22 kW). In some embodiments, the system has at least two compressors, each having a power rating of from 5 to 30 hp. In some embodiments, the system has at least three compressors, each having a power rating of from 5 to 30 hp. In some embodiments, the system has at least four compressors, each having a power rating of from 5 to 30 hp. In some embodiments, the system has at least five compressors, each having a power rating of from 5 to 30 hp.

In some embodiments, the type of compressor is selected from those including, but not limited to, those described below.

Reciprocating compressors use pistons driven by a crankshaft. They can be either stationary or portable, can be single or multi-staged. In some embodiments, such reciprocating compressors are driven by electric motors or internal combustion engines. In some embodiments, reciprocating compressors have the power that can be from 1/5 to 30 hp. In other embodiments, the reciprocating compressors may have 50 hp. In some embodiments, the compressors are able to handle discharge pressures from low pressure to very high pressure (e.g., >5000 psi or 35 MPa).

Rotary screw compressors use two meshed rotating positive-displacement helical screws to force the gas into a smaller space. In some embodiments, rotary screw compressors can be from 1/5 hp (0.15 kW) to over 500 hp (373 kW) and from low pressure to very high pressure (e.g., >1200 psi or 8.3 MPa). Scroll compressors, which are in some ways similar to a rotary screw device, include two interleaved spiral-shaped scrolls to compress the gas. Some scroll compressors can be from 1/5 hp (0.15 kW) to over 500 hp (373 kW) and from low pressure to very high pressure (e.g., >1200 psi or 8.3 MPa).

Centrifugal compressors belong to a family of turbomachines that include fans, propellers, and turbines. These machines continuously exchange angular momentum between a rotating mechanical element and a steadily flowing fluid. The fluid vapor is fed into a housing near the center of the compressor, and a disk with radial blades (impellers) spins rapidly to force vapor toward the outside diameter. The change in diameter through the impeller increases gas flow velocity, which is converted to a static pressure increase. A centrifugal compressor can be single-stage, having only one impeller, or it can be multistage having two or more impellers mounted in the same casing. For process refrigeration, a compressor can have as many as 20 stages.

In some embodiments, systems can have the compressor capacity as low as 1,000 BTU/ hour (0.3 kW) or as high as 1,000,000 BTU/hour (300 kW). In other embodiments, the compressor capacity of the system is up to 10,000 BTU/ hour (3 kW). In other embodiments, the compressor has the capacity of the system as high as 600,000 BTU per hour (175 kW) or higher.

Suitable compressors can be purchased from any number of equipment manufacturers, such as Carlyle, Copeland, and Bitzer to name several.

An Evaporator is the heat absorption component of a system where the liquid heat transfer composition (e.g., refrigerant) is evaporated from a liquid to a vapor. Evaporators have at least one inlet port for receiving liquid refrigerant compositions and at least one outlet port where by refrigerant in the vapor phase is exhausted. The evaporator outlet port is in fluid communication to at least one or more compressors.

In some embodiments, an evaporator has one or more coils. The evaporator coil is inside of the evaporator and in some embodiments, the coil is the conduit by which two phase liquid/vapor refrigerant moves, is evaporated to the vapor state.

In some embodiments, an evaporator has three or more coils. In some embodiments, an evaporator has five or more coils. In some embodiments, an evaporator has eight or more coils. In some embodiments, an evaporator has no coil. In some embodiments, an evaporator is a single cavity. In some embodiments, air is moved over the evaporator coil(s) or single cavity and is the heat transfer medium that transfers heat to or from the temperature controlled zone.

In some embodiments, there may be two or more different sizes of evaporators in the system. And in some systems with two or more evaporators, some systems can have evaporator that are identical. In other multi-evaporator systems, the evaporators are not identical. In some multi-evaporator systems, each evaporator can have the same or a different number of coils.

In the embodiments described herein, the system contains a composition described above as the refrigerant composition in the condenser-to-evaporator circuit.

In some embodiments, the evaporator coils extend to a distance outside of the evaporator and, as such, are capable of being in fluid communication with a distributor at the distributor's outlet port(s). In some embodiments, the length of the evaporator coil(s) extending outside of an evaporator is a length selected from the lengths of about 12 inches, about 18 inches, about 24 inches, about 30 inches, about 36 inches, about 42, inches, about 48 inches, about 54 inches, about 60 inches, about 66 inches, or about 72 inches and combination thereof, where 6 inches = 15 cm.

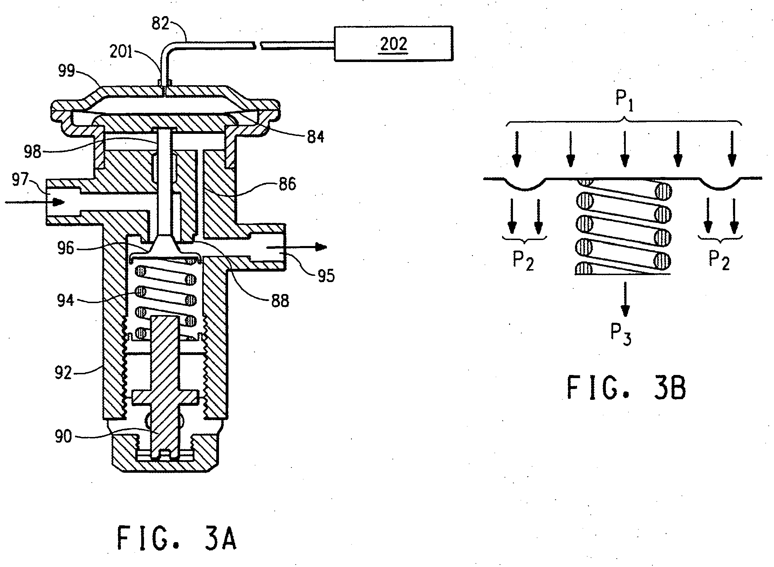

An Expansion Valve is one type of metering device which controls the flow of refrigerant between the condenser and the evaporator in a heat transfer system. Such expansion valves may be automatic valves or thermostatic valves. Liquid refrigerant flows into the Expansion Valve where it becomes two phases (liquid and vapor phases). The two phased refrigerant exits the expansion valve and flows into the evaporator. See Figure 3 which is a schematic illustrating one type of an expansion valve. An expansion valve may include other elements and be coupled with a temperature responsive sensor that communicates with a diaphragm or bellows in the expansion valve body. In a system used for cooling, the expansion valve functions to throttle liquid from the high-pressure condenser pressure to the low-pressure evaporator pressure, while feeding enough refrigerant to the evaporator to have effective heat removal and superheat control.

The expansion valve is used to avoid overfeeding the evaporator, and thusly, useful to help in preventing liquid refrigerant from reaching the compressor(s) of the system. The expansion valve(s) of any system are selected to work in system having a predetermined amount of superheat at the outlet of the evaporator. The amount of superheat is one aid in avoiding liquid refrigerant from reaching the compressor(s) of the system. The static superheat is the amount of superheat required to allow the refrigerant to flow through the expansion valve.

Expansion valves are often selected for systems based system operating parameters and can vary from system to system, as well as within each system. Expansion valves are also sized and selected with the thermo-physical properties of a particular heat transfer composition (e.g., R22 or one of the compositions described herein) to be used in the system.

Other factors useful in selecting an expansion valve include the rated load of the system, the evaporator's target average operating temperature as well as the target temperature to be maintained in the temperature controlled zone.

In some embodiments, the expansion valve is a thermostatic expansion valve (herein referred to as a "TXV"), of which one embodiment is illustrated in Figure 3. In some embodiments, the TXVs useful in the described systems herein, have a capacity of up to 0.25 Ton; in some embodiments, a TXV has up to a 0.5 Ton capacity; in other embodiments, a TXV has up to a 3 Ton capacity; and in still other embodiments, the TXV can have a capacity higher than 3 Tons. In some embodiments, there is more than one TXV; in some embodiments, the TXVs have the same capacity; and in other embodiments, the TXVs may have different capacities.

In some embodiments, the system may further include a check valve which when the refrigerant flows in the reverse direction (such as with a heat pump type system), the check-valve opens to allow refrigerant to bypass the expansion valve. In some systems, the expansion valve may be a self-contained combination temperature and pressure responsive thermostatic expansion valve and check valve (see, e.g., U.S. Patent No. 5,524,819).

In some systems in need of a retrofit with a non-ozone depleting compositions, many of the existing systems have the expansion valves that are selected for use with R22 refrigerant. In other embodiments, the expansion valves are selected for use with the compositions described above. In some embodiments, the expansion valves are expansion valves already in use in exiting heat transfer systems using R22 in the condenser-to-evaporator circuit and R22, or a fluid or fluid mixture selected to provide appropriate control to the expansion valve when R22 is used in the condenser-to-evaporator circuit, in the existing sensing element. In some embodiments, the sensing element provides appropriate control to the expansion valve whereby, as the temperature of the refrigerant exiting the evaporator increases or decreases, the temperature of the fluid in the sensing element likewise increases or decreases. As the temperature of the fluid increases, the pressure in the sensing line increases. As the temperature of the fluid decreases, the pressure in the sensing line decreases.

In some embodiments, a group of elements illustrated in Figure 3 are referred to as a Powerhead. In one such embodiment, a Powerhead would comprise a diaphragm, 84, a thermostatic element, 99, a capillary tube, 82, a sensing element, 201, and a remote bulb, 202.

In some embodiments, the expansion valves are designed to work with or otherwise accommodate a distributor. In some embodiments, the distributor may include a distributor nozzle. The nozzle on the distributor reduces the outlet port size from the expansion valve. In some embodiments the nozzle reduces the outlet port from the TXV by as much as 75%. In other embodiments, the nozzle reduces the TXV outlet port by at least 50%. In other embodiments the TXV outlet port is reduced by at least 30%. In other embodiments the TXV outlet port is reduced by less than 30%. In other embodiments, the nozzle reduces the outlet port of the TXV and is sized to achieve sufficient turbulence to create a substantially uniform mixture of a two-phase liquid and vapor refrigerant that will enter the evaporator.

In some system embodiments, one or more expansion valve may further have an external equalizer coupled to the outlet side of the evaporator and the bottom of the diaphragm or bellows of the thermostatic expansion valve. In some embodiments, the external equalizer is used in systems having a high pressure drop across the evaporator's inlet and outlet or where an expansion valve distributor is required. In some embodiments a TXV is used with an external equalizer.

When an external equalizer is used, an equalizer fitting (having two ends) is connect to the evaporator outlet port at one end and connected to the expansion valve's diaphragm (or bellows as the case may be) allowing circulating refrigerant vapor to fill the external equalizer and apply the vapor pressure (P2 of Figure 3B) to the diaphragm (or bellows as the case may be).

A distributor is an apparatus in fluid communication with at least one expansion valve. The use of a distributor on an expansion valve can increase the pressure drop in a large evaporator by providing several parallel paths through the evaporator (e.g., an evaporator having multiple coils).

In some embodiments, distributors are used in systems having refrigerated display cases, walk-in coolers, freezers and combinations thereof (for example, such as systems often found in supermarkets and convenience stores). In some embodiments, the distributor can have two or more outlet ports; in some embodiments, the distributor has three or more outlet ports; and in other embodiments, the distributor has at least six outlet ports. In other embodiments, the distributor has more than six outlet ports.

In some embodiments, the distributor outlet ports have an outside diameter selected from dimensions in the range of from about 3/16 inches (5 mm) to about 3/8 inches (10 mm). In some embodiments, the outside diameter of the distributor port is more than 3/8 inches.

In some embodiments, the nozzle and the distributor are separate elements, and in other embodiments, the nozzle and distributor are a single element.

Sporlan, Emerson Flow and Danfoss are a few of the manufacturers and suppliers of expansion valves, nozzles and distributors.

The expansion valve, nozzle and distributor are typically selected and sized to fit the heat load of the system and the evaporator to which it will be coupled. In some systems, having more than one expansion valve, each expansion valve may be the same or different; and each may have the same or different nozzle and/or distributor; and each distributor may have the same or different number of distributor outlet ports; and each distributor outlet port may be the same or different.

In some systems, there are an equal number of expansion valves and evaporators. In other systems, there are more evaporators than expansion valves. In some systems not all TXVs have a distributor coupled to it.

The high side is the side of refrigeration system where the condensing takes place.

A Liquid Refrigerant Line is the term used to describe all of the conduits used to deliver liquid refrigerant to the metering device. In some embodiments there can be more than one type of liquid refrigerant lines. In some embodiments there may be more than one type of metering device in the system.

The conduit sizes of a liquid refrigerant lines can vary and will depend on, among other factors, the size of the system, the capacity of evaporators in fluid communication with each liquid refrigerant line, as well as where in the system that portion of the liquid refrigerant line is being used.

In some embodiments, the Liquid Refrigerant Line may further comprise a Liquid Circuit Line, a Liquid Trunk Line or combinations thereof. In some embodiments, the liquid refrigerant line comprises of one or more liquid circuit lines, one or more trunk lines or combinations thereof.

In some embodiments, the liquid refrigerant line is about 5 feet in length (1.5 m). In some embodiments, the liquid refrigerant line is between about 5 and 10 feet in length (1.5 - 3 m). In some embodiments, the liquid refrigerant line is longer than 10 feet in length. The liquid refrigerant lines can have the same length and the same diameter or different lengths and different diameters.

A Liquid Circuit Line is one type of the Liquid Refrigerant Line and is a term used to describe that portion of the liquid refrigerant line in fluid communication with the expansion valve and is a conduit where liquid refrigerant flows from the condenser to the expansion valve. The liquid circuit line conduit size can vary and can depend on, among other factors, the size of the system as well as the capacity of evaporators in fluid communication with each liquid circuit line.

In some embodiments, there are two or more evaporators in fluid communication with the same liquid circuit line. In some embodiments the liquid circuit line may be 5 feet (1.5 m) or shorter. In some embodiments, the liquid circuit line may be from about 5 to 10 feet in length (1.5 - 3 m). In some embodiments, the liquid circuit line may be longer than 10 feet in length. In some embodiments, the liquid circuit line may be as long as 20 feet (6 m). In some embodiments, the liquid circuit line is longer than 20 feet in length. In some embodiments, there are two or more liquid circuit lines, which can have the same or different lengths. The liquid circuit lines can have the same length and the same diameter or different lengths and different diameters.

A Liquid Trunk Line is a type of liquid refrigerant line and is the term used to define a portion of the liquid refrigerant line in system embodiments having more than one liquid circuit line. The Liquid Trunk Line is a conduit carrying liquid refrigerant from the condenser to the liquid circuit lines.

In some embodiments, the Liquid Trunk Line is 20 feet (6 m) or shorter. In some embodiments, the Liquid Trunk Line is longer than 20 feet. In some embodiments, the Liquid Trunk Line may be as long as 30 feet (9 m), 50 feet (15 m) or 100 feet (30 m). In some embodiments, the Liquid Trunk Line is more than 100 feet. In some embodiments, the Liquid Trunk Line is more than 200 feet (60 m), more than 300 feet (90 m), more than 500 feet (150 m), more than 1,000 feet (300 m), more than 1,500 feet (450 m) or more than 2,000 feet (600 m).

In some embodiments, there are two or more Liquid Trunk Lines that can have the same length or different lengths. The liquid trunk lines can have the same length and the same diameter or different lengths and different diameters.

In some embodiments, there are two or more liquid circuit lines in fluid communication with at least one liquid trunk line, which is, in turn, in fluid communication with the outlet side of the condenser. In some embodiments, there may be more than one liquid trunk line and more than one condenser. In some embodiments, there is more than one liquid trunk line in fluid communication with one condenser.

In some embodiments, the systems further have one or more oil separators. The oil separator is term used to refer to any apparatus that separates all or a portion of any oil picked up by the circulating refrigerant in the compressor during the compression cycle. In some embodiments, the oil separator stores the oil; and in other embodiments, the oil separator returns the oil to the compressor. In some embodiments, the oil separator stores the oil and returns the oil to the compressor. In some embodiments, the oil separator is located near the outlet side of the compressor

In some embodiments, there is a subcooler. A Subcooler is a term used to describe any element of the system that cools the liquid refrigerant before it reaches the liquid refrigerant metering device (e.g., TXV) A subcooler can be as simple as extra piping or conduit or a separate apparatus, such as a heat exchanger using a cooling medium, such as chilled water or refrigerant, to cool the liquid refrigerant prior to it reaching the expansion valve. In some embodiments, the piping or conduit is about three feet in length. In some embodiments, the subcooler feature comprising piping or conduit is longer than 3 feet. In some embodiments, subcooler feature comprises a length of pipe or conduit which is not insulated.

In such embodiments, the piping or conduit is selected from the group consisting of copper, copper alloys (including alloys containing molybdenum and nickel), aluminum or aluminum alloys, or stainless steel or combination thereof. In some embodiments, subcooling is accomplished by placing the liquid refrigerant lines from at least two systems adjacent to each other, wherein at least two liquid refrigerants are at two different temperatures. In one embodiment, the subcooler is created by positioning a length of the liquid refrigerant line from a low temperature system near a length of the liquid refrigerant line from a medium temperature system. In some embodiments, the liquid refrigerant lines are adjacent to each other over a substantial distance.

In some embodiments, the two different temperature liquid refrigerant lines can be substantially straight. In other embodiments, the two different temperature liquid refrigerant lines can be curved. In still other embodiments, two different temperature liquid refrigerant lines can include a loop. In some embodiments, the subcooling may be accomplished by a separate cooling apparatus using a refrigerant used alone or in combination with other subcooler elements.

In some embodiments, more than one element contributes to subcooling the vapor refrigerant.

In some embodiments, the system may also have a liquid refrigerant receiver in fluid communication between the condenser and the evaporator. In some embodiments, the liquid refrigerant receiver is placed prior to the TXV. A receiver is a term used to refer to any system element that can hold liquid refrigerant for any number of reasons. Such reasons include creating a reservoir of liquid refrigerant from which the expansion valve can draw, a collection apparatus useful for storing liquid refrigerant during system maintenance operation, as well as other needs that any individual system may have and combinations of reasons and combinations of reasons.

In some embodiments, there is more than one receiver. In some embodiments, there is at least one subcooler and at least one receiver placed in the system after the condenser and prior to the evaporator. In some embodiments, at least one receiver may be between the compressor and the condenser. In some embodiments, the receiver is located near the compressor prior to the condenser and in other embodiments the receiver is located closer to the condenser.

In some embodiments, the liquid trunk line is in fluid communication with the receiver. In some embodiments, the receiver is any container of any shape (including, but not limited to, for example, a conduit having a larger diameter than the liquid trunk line, or bowl, tank, drum, canister, and the like). The receiver can be made of any material suitable for holding the circulating refrigerant, including but not limited to copper, copper alloys, aluminum, aluminum alloys, stainless steel, or combinations thereof. In some copper alloy embodiments, the copper alloy further contains molybdenum and nickel and mixtures thereof.

In some embodiments, the receiver is a tube shape a diameter of between about 6 and about 15 inches and a length of from about 50 to about 250 inches. In other embodiments, the receiver may have a diameter of between about 12 and about 13 inches and a length of from about 100 to about 150 inches. In one embodiment, the receiver has a diameter of about 12.75 inches and a length of about 148 inches. In another embodiment, the receiver has a diameter of about 12.75 inches and a length of about 104 inches. In some systems there are two or more receivers, which can be placed near each other in the system or in different locations in the system. In some embodiments, the receiver is sized to hold the entirety of the refrigerant charge.

A Vapor Refrigerant Line is a term used to describe the conduit(s) which delivers vapor refrigerant from the evaporator to condenser. In some embodiments, the vapor refrigerant line comprises one or more vapor circuit lines, one or more suction line or combinations thereof. The conduit size of any vapor refrigerant line can vary and will depend on the size of the system as well as the capacity of evaporators in fluid communication with each liquid circuit line, as well as where in the system that portion of the conduit is being used. In some embodiments, the vapor circuit line is 5 feet (1.5 m) in length, and in other embodiments the vapor circuit line is 10 feet (3 m) in length. In some embodiments, the vapor refrigerant lines have the same length or different lengths and may have the same or different diameters.

In some embodiments, there may be a Vapor Circuit Line. A Vapor Circuit Line is a term used to describe a portion of the Vapor Refrigerant Line and in fluid communication with the evaporator outlet and the Suction Line. In some embodiments the vapor circuit Line may be 5 feet (1.5 m) or shorter. In some embodiments, the vapor circuit line may be from 5 to 10 feet (1.5 to 3 m) in length. In some embodiments, the vapor circuit line may be as long as 20 feet (6 m). In some embodiments, there are two or more vapor circuit lines, which can have the same or different lengths and may have the same or different diameters.

A Suction Line is a term used to describe a portion of the Vapor Refrigerant Line that is in fluid communication with the evaporator outlet and the compressor inlet. In some embodiments, the Suction Line is 20 feet (6 m) or shorter. In some embodiments, the Suction Line is longer than 20 feet. In some embodiments, the Suction Line may be as long as 30 feet (9 m), as long as 50 feet (15 m), or as long as 100 feet (30 m), . In some embodiments, the Suction Line is more than 100 feet. In some embodiments, the Suction Line is more than 200 feet (60 m), more than 300 feet (90 m), more than 500 feet (150 m), more than 1,000 feet (300 m), more than 1,500 feet (450 m), or more than 2,000 feet (600 m). In some embodiments, there are two or more Suction Lines that can have the same length or different lengths and may have the same or different diameters.

In some embodiments, the suction line is in fluid communication with more than one compressor and in other embodiments, there is more than one suction line in fluid communication with one compressor.

The suction pressure is the pressure on the low pressure side of the system.

A Sensing Element is a device having two ends: one end is communicatively coupled to the outlet side of at least one evaporator and senses the temperature of the vapor exiting the evaporator, and the other end is communicatively coupled to at least one pressure sensing element of the expansion valve. The sensing element contains refrigerant or other fluid, and the refrigerant or other fluid in the sensing element is sealed from the refrigerant circulating in the condenser-to-evaporator circuit such that there is no co-mingling of components.

In some embodiments described herein, the sensing element contains a fluid suitable for use when R22 is used in the condenser-to evaporator circuit. In some embodiments, at least one sensing element contains a composition described above. In some embodiments of a sensing element, the fluid suitable for use in the sensing element when R22 is used in the condenser-to-evaporator circuit is R22. In some embodiments of a sensing element, the fluid suitable for use in the sensing element, when R22 is used in the condenser-to-evaporator circuit, is a fluid or fluid mixture which has a pressure equal to or higher than R22. In some embodiments of a sensing element, the fluid suitable for use in the sensing element when R22 is used in the condenser-to-evaporator circuit, is a fluid or fluid mixture which has a pressure equal to or lower than R22. In some embodiments of a sensing element, the fluid suitable for use in the sensing element when R22 is used in the condenser-to-evaporator circuit, is a fluid or fluid mixture which has a slope of pressure/temperature relation that is substantially different from that of R22.

In one embodiment, the end of the sensing element that is communicatively coupled to the outlet side of the evaporator is a metallic bulb, which may be of any shape or volume, and the other end is a capillary tube. In some embodiments, the end of the sensing element end communicatively coupled to the outlet side of the evaporator is coupled to the evaporator outlet port. In other embodiments, the end of the sensing element coupled to the outlet side of the evaporator is coupled to the vapor refrigerant line (including either the vapor circuit line or the suction line).

In some embodiments, the sensing bulb is copper, a copper alloy or aluminum. In some embodiments, the sensing element is simply a line, which in some embodiments has a uniform diameter along its entire length and in other embodiments, is a line having a diameter that varies along its length.

The sensing element is of any length so as to communicate sufficient information about the temperature of vapor refrigerant (that is exiting from the evaporator) to the expansion valve. This length will vary from system to system and when two or more sensing elements are used in a multi-evaporator system, the length of each may be the same or different within each system.

In some embodiments, the sensing element is 3 feet (90 cm) in length or less (the sum of the length of any tube, line, pipe, conduit and combinations thereof). In some embodiments the sensing element is more than 3 feet in length. In some embodiments, the sensing element is from 3 to 10 feet in length (0.9 - 3.0 m), more than 10 feet (3.0 m) in length, more than 15 feet (4.5 m) in length, or more than 20 feet (6.0 m) in length.

In some embodiments, the sensing element is of sufficient diameter to effectively communicate with the TXV valve. In some embodiments, the diameter of the sensing element is no larger than 1/8 inch (3 mm). In some embodiments, the diameter of the sensing element is larger than 1/8 inch. In other embodiments the sensing element is approximately 1/16 inch (1.5 mm) or narrower. In other embodiments the sensing element is larger than 1/16 inch. In other embodiments, the sensing element is approximately 1 /4 inch (6 mm) or narrower. In other embodiments, the sensing element is larger than 1/4 inch.

Some embodiments are low temperature systems. In some embodiments, the system includes at least one evaporator operated at a target average temperature of at or about -25 °F (-32 °C) or lower. In some embodiments, the system includes at least one evaporator operated at a target average temperatures of at or about -10 °F (-23 °C) or lower. In some embodiments, system includes at least one evaporator operated at a target average temperature of about 0 °F (-18 °C) or lower.

In some embodiments, the system has a target temperature to maintain the contents in a temperature controlled zone in a frozen state. In some embodiments, the systems are operated to maintain the temperature of the contents in a temperature controlled zone at about 0 °F (-18 °C). In some embodiments, the target temperature of the temperature controlled zones is below about -10 °F (-23 °C).

Some embodiments are Medium Temperature systems. In some embodiments, the systems include at least one evaporator operated at a target average temperature between about 0 °F (-18 °C) and up to as high as about 40 °F (+4 °C). In some embodiments, at least one evaporator is operated at a target average temperature between about 0 and about +20 °F (-18 to -7 °C).

In some embodiments, the systems have a target temperature to maintain contents in a temperature controlled zone in a chilled, non-frozen state. In some embodiments, the target temperature for the contents in a temperature controlled zone is to be maintained at a temperature of from about +20 to about +45 °F (-7 to +7 °C). In some embodiments, the target temperature of a temperature controlled zone is between about +20 and about +40 °F (-7 to +4 °C).

In some embodiments, the temperature controlled zone of the system has a target temperature below about -10 °F (-23 °C). In some embodiments, the temperature controlled zone of the system has a target temperature of from about -10 to about +5 °F (-23 to -15 °C). In some embodiments, the target temperature of the temperature controlled zone is equal to or less than about 0 °F (-18 °C). In some embodiments, the temperature controlled zone of the system has a target temperature below between about -5 and + 5 °F (-20 to -15 °C), excluding any defrost cycles. In some embodiments, the target temperature of the temperature controlled zone is equal to or less than about +32 °F (0 °C).

In some embodiments, the target temperature of the temperature controlled zones is between about 0 and about +40 °F (-18 to +4 °C). In some embodiments, the target temperature of the temperature controlled zones is between about +10 and about +40 °F (-12 to +4 °C). In some embodiments, the temperature controlled zone of the system has a target temperature below between about +25 and +35 °F (-4 to +2 °C), excluding any defrost cycles.

In some embodiments, the temperature controlled zone of the system has a target temperature of from about +15 to about +45 °F (-9 to +7 °C). In some embodiments, the target temperature of the temperature controlled zone is equal to or less than about +20 °F (-7 °C).

In some embodiments, the systems are designed to undergo periodic defrost cycles. A defrost cycle is a short term warming of the evaporator. In some embodiments, the length of time depends on the size and condition of the evaporator undergoing defrost. In some embodiments, the defrost cycle is long enough to remove any ice deposited on the evaporator. For example, in some embodiments, the short term warming occurs over 60 minutes or shorter; and in other embodiments, the warming can be as long as a few hours or more.

In some embodiments, the defrost cycle may not affect the temperature of the temperature controlled zones. In some embodiments, the defrost cycle may affect the temperature of the temperature controlled zones. In some embodiments the defrost cycle may not affect the temperature of the contents.

In some embodiments, air conditioning systems may be operated to achieve a temperature in the temperature control zone at typical room temperatures. In other embodiments, air conditioning systems may be operated to achieve a temperature in the temperature control zone at a temperature of from about 60 to about 80 °F (16 to 27 °C). And, in some embodiments, air conditioning systems may be used to maintain the temperature controlled zone at a temperature having the need to be maintained at temperatures below about 60 °F (16 °C).

In some embodiments, the system is operating as a heat pump system. In some embodiments, the heat pump system maintains the temperature controlled zone at a temperature above 60 °F (16 °C). In some embodiments, the heat pump maintains the temperature controlled zone at a temperature above 70 °F (21 °C).

In some embodiments, the systems are designed to cool a load of less than 1/4 Ton, where "Ton" is as defined above. In some embodiments, the systems are designed to cool a load of less than 1/2 Ton. In some embodiments, the systems are designed to cool a load of less than 1 Ton. In some embodiments, the systems are designed to cool a load from about 1 to about 3 Tons. In some embodiments, the systems are designed to cool a load of from about 1 Ton to about 5 Tons. In some embodiments, the systems are designed to cool a load of greater than 5 Tons. In some embodiments, the systems are designed to cool a load of 8 Tons or greater than 8 Tons. In some
embodiments, the systems are designed to cool a load of 10 Tons or greater than 10 Tons.

In some embodiments, the systems are designed to cool a load of 12 Tons or greater than 12 Tons. In some embodiments, the systems are designed to cool a load of 15 Tons or greater than 15 tons. In some embodiments, the systems are designed to cool a load of 20 Tons or greater than 20 tons. In some embodiments, the systems are designed to cool a load of 22 Tons or greater than 22 Tons. In some embodiments, the systems are designed to cool a load of greater than 25 Tons. In some embodiments, the systems are designed to cool a load of from 20 to 60 Tons. In some embodiments, the systems are designed to cool a load of greater than 60 Tons. In each of these systems, the total load may be reached by variety multi-sub systems having multiple temperature controlled zones with different target temperatures and different operating evaporator temperatures. In some embodiments, there may be more than one compressor and one or more condenser.

In some embodiments, the system includes a refrigerator, freezer or air conditioner or combinations thereof. In some embodiments, the system has one or more refrigerator temperature controlled zones and one or more freezer temperature controlled zones.

The tubes, lines, piping and conduits of the systems described herein can be made of any suitable material that can contain the refrigerants at the various temperatures and pressures without substantially altering the refrigerant, either chemically or physically. In some embodiments, the tubes, lines, piping and conduits can be made from the same materials or different materials. In some embodiments, the tube, line, piping and conduit materials are selected from the group consisting of glass, copper, copper alloy, aluminum, aluminum alloys, stainless steel and combinations thereof. In some embodiments having copper alloy, the copper alloy may further include molybdenum, nickel or mixtures thereof.

In some embodiments, the total length of tubes, lines, piping and conduits in the system is at least about 40 feet (12 m). In some embodiments, the total length of tubes, lines, piping and conduits is greater than 40 feet. In some embodiments, the total length of tubes, lines, piping and conduits is at least about 60 feet (18 m). In some embodiments, the total length of tubes, lines, piping and conduits is greater than 60 feet. In some embodiments, the total length of tubes, lines, piping and conduits is at least about 120 feet (36.5 m). In some embodiments, the total length of tubes, lines, piping and conduits is greater than 120 feet. In some embodiments, the total length of lines, piping and conduits is at least about 200 feet (61 m). In some embodiments, the total length of tubes, lines, piping and conduits is greater than 200 feet. In some embodiments, the total length of tubes, lines, piping and conduits is at least about 500 feet (152 m). In some embodiments, the total length of lines, piping and conduits is greater than 500 feet. In some embodiments, the total length of lines, piping and conduits is at least about 1,000 feet (305 m). In some embodiments, the total length of lines, piping and conduits is greater than 1,000 feet. In some embodiments, the total length of lines, piping and conduits is at least about 2,000 feet (610 m). In some embodiments, the total length of lines, piping and conduits is greater than 2,000 feet.

In some embodiments, the system has an average evaporator temperature selected from the temperature of between about -40 to about +40 °F (-40 to+4 °C) and a condenser temperature is in the range of between about +60 to +130 °F (+16 to +54 °C). In some embodiments, the system has an average evaporator temperature selected from the range above and the condenser temperature is maintained in the range of from about +70 to about +105 °F (+21 to +40 °C).

In some embodiments, the system has an average evaporator temperature selected from the temperature between -20 and + 20 °F (-29 to -7 °C) and a condenser temperature is maintained in the range of between about +60 to about +130 °F (+16 to +54 °C). In some embodiments, the system has an average evaporator temperature selected from the range above and a condenser temperature is maintained in the range of between about +70 to about +105 °F (+21 to +40 °C).

In some embodiments, the liquid refrigerant undergoes about 5 °F (3 °C) of subcooling prior to reaching the expansion valve. In other embodiments, the liquid refrigerant undergoes between about 5 and about 10 °F (3 to 6 °C) of subcooling prior to reaching the expansion valve, or between about 10 and about 20 °F (6 to 11 °C) of subcooling prior to reaching the expansion valve. In some embodiments, the liquid refrigerant undergoes more than 20 °F (11 °C) of subcooling. In some embodiments, the liquid refrigerant undergoes no more than 50 °F (22 °C) of subcooling. In some embodiments, the liquid refrigerant undergoes more than 50 °F (22 °C) of subcooling.

In some embodiments, the system has at least two temperature controlled zones, at least two R22 expansion valves, and at least two evaporators. In some embodiments, the system has at least two temperature controlled zones, at least two expansion valves selected for the compositions described above, and at least two evaporators.

In some embodiments having two or more sensing elements, at least one sensing element contains R22 and at least one other sensing element contains a composition described above.

In some embodiments, the systems may include 4 liquid circuit lines, 4 compressors, and 21 refrigerator and/or freezers cases and include more than 50 TXVs with distributors and 10 or more TXVs without distributors. In other embodiments, the systems may be low temperature refrigeration systems having from 9 to 15 liquid circuit lines, 15 to 42 freezer cases coupled to the system as various locations along the liquid circuit lines, including 1 or more walk-in freezer, and utilize from 4 to 6 compressors.

Some embodiments are Medium Temperature systems having 4 liquid circuit lines, 21 refrigeration display cases as the temperature controlled zones, 4 compressors, and at least 60 TXV with distributors, and 10 TXVs without distributors. Some embodiments include only walk-in coolers, having at least 7 TXVs with distributors. Some Medium Temperature systems have 15 liquid circuit lines, having 42 cases (selected from the group consisting of refrigerators, freezers, chillers and combinations thereof), using 6 compressors, 34 TXVs with distributors, and 8 TXV without distributors. Some Medium Temperature systems use no distributors on the TXVs. Some Medium Temperature systems include 10 liquid circuit lines, having 18 refrigerator cases and 6 walk-in chiller cases, utilizing 4 compressers, and 18 TXV with distributors and 9 TXVs without distributors.

Some embodiments are Low Temperature systems including 9 liquid circuit lines, 28 freezer cases, 1 walk-in freezer, multiple compressors, 32 TXVs with distributors, and 1 TXV without a distributor. Some systems include 4 walk-in freezers using 5 TXVs with distributors.

In some embodiments, the system is rated to be operated at a load of at least 1000 BTUs/hour (293 W). In some embodiments, the system is rated to be operated at a load of more than 1,000 BTUs/hour. In some embodiments, the system is rated to be operated at a load of at least 50,000 BTUs/hour (14.7 kW). In some embodiments, the system is rated to be operated at a load of at least 100,000 BTUs/hour (29.3 kW). In some embodiments, the system is rated to be operated at a load of more than 100,000 BTUs/hour.

### Chillers

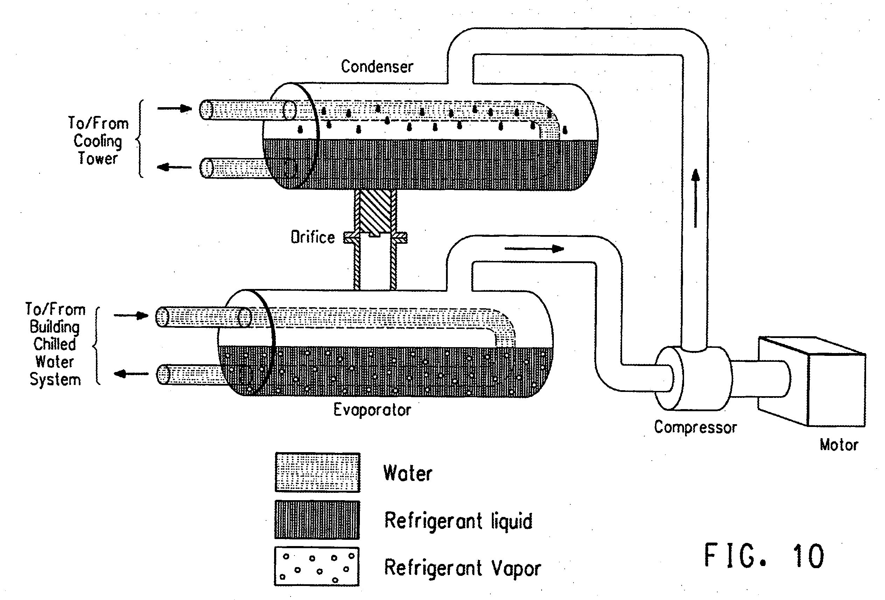

In one embodiment, the disclosed compositions may be used as refrigerants in a chiller. A chiller is a type of air conditioning/refrigeration apparatus. Two types of water chillers are available, vapor-compression chillers and absorption chillers. The present disclosure is directed to a vapor compression chiller. Such vapor compression chiller may be either a flooded evaporator chiller, which is shown in Fig. 10, or a direct expansion chiller, which is shown in Fig. 12. Both the flooded evaporator chiller and a direct expansion chiller may be air-cooled or water-cooled. In the embodiment where chillers are water cooled, such chillers are generally associated with cooling towers for heat rejection from the system. In the embodiment where chillers are air-cooled, the chillers are equipped with refrigerant-to-air finned-tube condenser coils and fans to reject heat from the system. Air-cooled chiller systems are generally less costly than equivalent-capacity water-cooled chiller systems including cooling tower and water pump. However, water-cooled systems can be more efficient under many operating conditions due to lower condensing temperatures.

Chillers may be coupled with an air handling and distribution system to provide comfort air conditioning (cooling and dehumidifying the air) to large commercial buildings, including hotels, office buildings, hospitals, universities and the like. In another embodiment, chillers have found additional utility in naval submarines and surface vessels.

To illustrate how chillers operate, reference is made to the Figures. A water-cooled flooded evaporator chiller is shown illustrated in Fig. 10. In this chiller warm liquid enters the chiller from a cooling system, such as a building cooling system, shown entering at arrow 3, through an evaporator coil 9. In some embodiments, the warm fluid is water. In other embodiments, the warm fluid is water, further comprising ethylene glycol or propylene glycol. The liquid is delivered to an evaporator 214, where it is chilled by liquid refrigerant, which is shown in the lower portion of the evaporator. The liquid refrigerant evaporates at a lower temperature than the warm liquid which flows through coil 9. The chilled liquid re-circulates back to the building cooling system, as shown by arrow 4, via a return portion of coil 9. The liquid refrigerant, shown in the lower portion of evaporator 214 in Fig. 10, vaporizes and is drawn into a compressor 70, which increases the pressure and temperature of the refrigerant vapor. The compressor compresses this vapor so that it may be condensed in a condenser 80 at a higher temperature than the temperature of the refrigerant vapor when it comes out of the evaporator. A cooling medium, which is a liquid in the case of a water-cooled chiller, enters the condenser via a condenser coil 10 from a cooling tower at arrow 1 in Fig. 10. The cooling medium is warmed in the process and returned via a return loop of coil 10 and arrow 2 to a cooling tower or to the environment, respectively. This cooling medium cools the vapor in the condenser and turns the vapor to liquid refrigerant, so that there is liquid refrigerant in the lower portion of the condenser as shown in Fig. 10. The condensed liquid refrigerant in the condenser flows back to the evaporator through an expansion device or an orifice 8. Orifice 8 reduces the pressure of the liquid refrigerant, and converts the liquid refrigerant partially to vapor, that is to say that the liquid refrigerant partially changes to vapor (flashes) as pressure drops between the condenser and the evaporator. Flashing cools the refrigerant both the liquid and vapor to the saturated temperature at evaporator pressure, so that both liquid refrigerant and refrigerant vapor are present in the evaporator.

It should be noted that for a single component refrigerant composition, the composition of the vapor refrigerant in the evaporator is the same as the composition of the liquid refrigerant in the evaporator. In this case, evaporation will occur at a constant temperature. However, if a refrigerant blend is used, as in the case of the compositions of the present invention, the liquid refrigerant and the refrigerant vapor in the evaporator and in the condenser may have different compositions.

Chillers with capacities above 700 kW generally employ flooded evaporators, where the refrigerant is contained in the evaporator and the condenser (i.e., on the shell side). Flooded evaporators require higher charges of refrigerant, but permit closer approach temperatures and higher efficiencies. Chillers with capacities below 700 kW commonly employ evaporators with refrigerant flowing inside the tubes and chilled cooling medium in the evaporator and the condenser, i.e., on the shell side. Such chillers are called direct-expansion (DX) chillers. A water-cooled direct expansion chiller is illustrated in Fig. 12. In the chiller as illustrated in Fig. 12, warm cooling medium, such as water, enters the evaporator at inlet 14. Mostly liquid refrigerant enters an evaporator coil 9' at arrow 3' and evaporates. As a result, cooling of the water in the evaporator is produced, and cool liquid exits the evaporator at outlet 16. The refrigerant vapor exits the evaporator at arrow 4' and is sent to a compressor 7', where it is compressed and exits as high temperature, high pressure vapor. This vapor enters the condenser through a condenser coil at 1'. The vapor is cooled by the water in the condenser and becomes a liquid. Cooling water enters the condenser through a condenser water inlet 20 inlet and it extracts heat from the condensed vapor, which heats the water. The water exits through the condenser water outlet 18. The condensed refrigerant liquid exits the condenser at arrow 2' and goes through an expansion valve 12, which reduces the pressure of the liquid refrigerant. A small amount of vapor, produced as a result of the expansion, enters the evaporator with liquid refrigerant.

Vapor-compression chillers are identified by the type of compressor they employ. In one embodiment, the disclosed compositions are useful in centrifugal chillers, which utilize centrifugal compressors. In another embodiment the disclosed compositions are useful in positive displacement chillers, which utilize positive displacement compressors, either reciprocating, screw, or scroll compressors.

### METHOD OF RETROFITTING SYSTEMS PREVIOUSLY USING R22

Further described is a method for retrofitting a heat transfer system having R22 in its condenser-to-evaporator circuit of the system, and having an R22 expansion valve, and having an R22 containing sensing element, said method comprising:
(i) removing R22 from the condenser-to-evaporator circuit of the system;
(ii) charging the condenser-to-evaporator circuit of the system with a replacement composition having a saturated vapor pressure that is substantially the same as that of R22, that has at least 90% of the cooling capacity of R22 under that same system operating conditions, and does not increase the expansion valve loading capacity beyond 130% of said R22 expansion valve, wherein the replacement composition is as defined in claim 6 hereinafter.

In one embodiment, said method includes using a replacement refrigerant in step (ii) that has a zero ozone depletion potential.

In some embodiments, the replacement refrigerant has an acceptable global warming potential ("GWP"). In some embodiments, the global warming potential is lower than 2600. In some embodiments, the global warming potential is lower than 2300. In some the global warming potential is lower than 2000.

Global warming potentials (GWPs) are an index for estimating relative global warming contribution due to atmospheric emission of a kilogram of a particular greenhouse gas compared to emission of a kilogram of carbon dioxide over a time horizon of 100 years, as described in the Second Assessment Report (SAR - 1995) of the Intergovernmental Panel on Climate Change.

In one embodiment, the method further includes replacing the R22 in the sensing element with the same refrigerant used in step (ii).

In one embodiment, the method further comprising replacing all of the seals in the condenser-to-evaporator circuit of the system prior to the charging step (ii).

Seals in the condenser-to-evaporator circuit of the system are located in a variety of places in the systems including the interface between the two metal surfaces or fittings and other metal components, such as solenoid valves, Schraeder valves, ball valves, and the like, etc. The types of seals, can be as simple as an 0-ring or a gasket and these are typically made of a wide variety of materials such as plastics, rubbers, and other elastomers. In some embodiments, these materials are Neoprene, Hydrogenated Nitrile Butadiene Rubber, NBR, ethylene propylene diene, EPDM, Silicone and mixtures and combination thereof.

In some embodiments, no adjustment of the Superheat Adjustment Spring in the R22 Expansion Valve is required to accommodate the compositions described herein in the condenser-to-evaporator circuit. In other embodiments, the Superheat Adjustment Spring is adjusted by no more than 3 psig (20.7 kPa) in either the positive or negative direction to accommodate the replacement composition in the condenser to evaporator circuit.

Skilled artisans appreciate that objects in the figures are illustrated for simplicity and clarity and have not necessarily been drawn to scale or representative of the only embodiments. For example, the dimensions of some of the objects in the figures may be exaggerated relative to other objects to help improve the understanding of some embodiments.

### DETAILED DESCRIPTION OF THE DRAWINGS

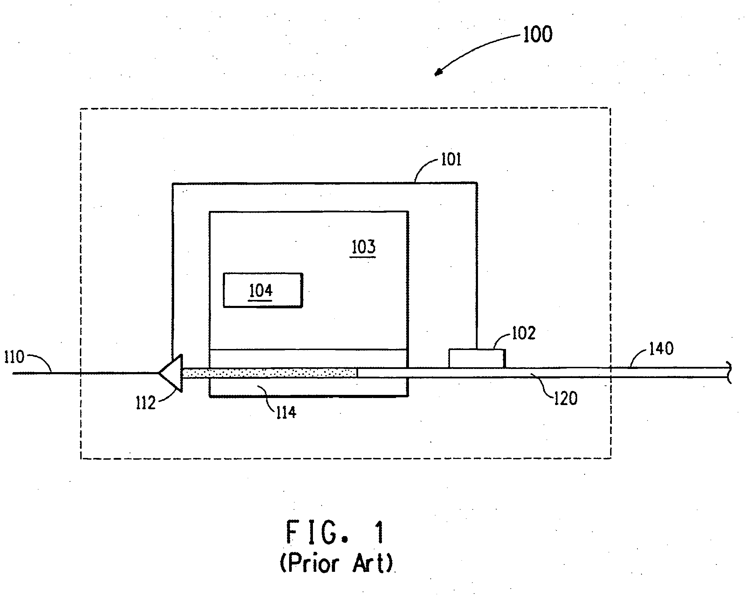

**FIGURE 1** is a schematic illustration of heat transfer system using a composition described above. This schematic illustrates system, 100, that using a composition described above in the sensing element, 101, and sensing bulb, 102. The temperature controlled zone to be cooled, is Cooling Zone, 103. The contents in the Cooling Zone are shown by Contents, 104. The liquid refrigerant line, 110, enters the expansion valve, 112, and flows into the Evaporator, 114, where it expands, evaporates and exits the evaporator as a superheated vapor, 120, in the Suction Line, 140. The condenser and compressor of such a system are not shown. In one embodiment described herein, such a system may undergo a retrofit whereby the R22 in the condenser-to-evaporator circuit is replaced by a refrigerant composition described above. The expansion valve would not need to be changed. In some embodiments, the Superheat Adjustment spring (see Fig. 3 below) would be adjusted no more than ± 3 psig.

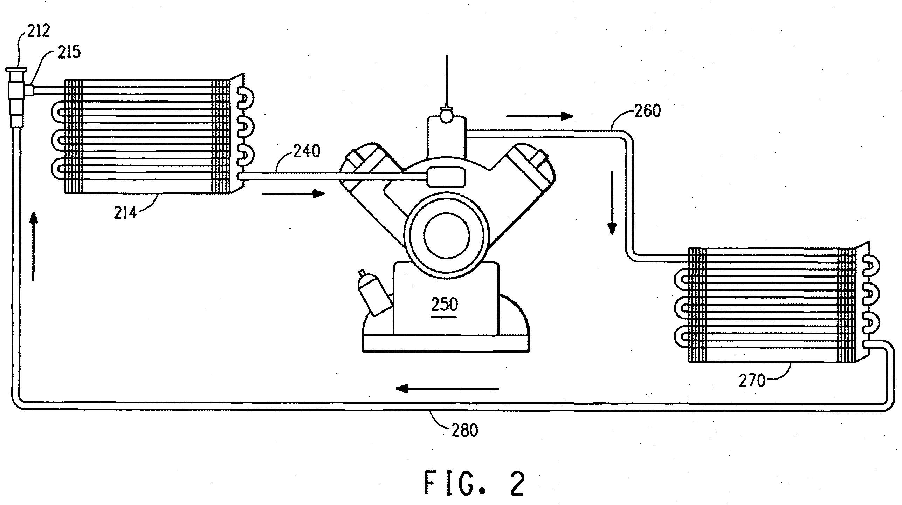

**FIGURE 2** is a schematic illustration of a refrigerant system having a thermostatic expansion valve. In this illustration, the system having the liquid refrigerant (either R22 as in the prior art or a composition described herein for the embodiments described herein) moves the liquid refrigerant through the TXV, 212), whereby the refrigerant exits as a part-liquid and part-gas phase into the coupled Evaporator, 214), wherein the part-liquid and part-gas refrigerant moves into the Evaporator, exiting there from in the gas phase and entering into the Suction Line, 240. The gas phase refrigerant then moves onward to and into the coupled Compressor, 250, whereby it is compressed and returned to a hot gas state. The refrigerant then moves out of the Compressor into the coupled Hot Gas Line, 260, and then is moved onward and into the Condenser, 270), whereby the gas refrigerant is condensed and returned to the liquid phase. The Liquid Refrigerant Line, 280, returns the liquid refrigerant to the TXV.
**FIGURE 3** is a schematic illustration of one type of expansion valve including the Valve Body, 92), coupled to a sensing element, 201, having a sensing bulb, 202, and liquid refrigerant inlet port, 97. The sensing bulb, 202, is part of the sensing element, 201, which is coupled to the thermostatic element, 99, having diaphragm, 84. In some embodiments, the diaphragm is replaced by a system of baffles (not shown). When the thermostatic element, 99, senses an increase in temperature in the sensing bulb, 202), P1 is exerted on the diaphragm pushing it downward (and in the embodiments of the systems described herein the sensing elements may contain R22 or one of the above described compositions) and pressure building up in the sensing capillary tube, 82, pushing against the push rod, 98), thereby pushing the Valve Plug, 96, away from the Valve Seat, 88), permitting liquid refrigerant to flow from the inlet port and to the evaporator (all while pushing against the Superheat Spring, 94). Some tuning of the TXV is permitted by the Superheat adjustment screw, 90), which can increase or decrease P3. In some embodiments, the Superheat adjustment screw, 90, can be used to adjust P3 by an amount of + / - 3 psig (20.7 kPa). In some embodiments, the Superheat adjustment screw, 90, can be used to adjust P3 by an amount greater than + / - 3 psig. The part liquid-part gas refrigerant exits the Valve Body, 92, via the Exit Port, 95. During operation of the system, the pressure exerted on the diaphragm (or baffles) is P1 (the Thermostatic Element's, 99, Vapor Pressure) and opposes the combined pressure P2 (the Evaporator pressure via Internal equalizer, 86,) and P3 (the pressure equivalent of the Superheat Adjustment Spring, 94, force).

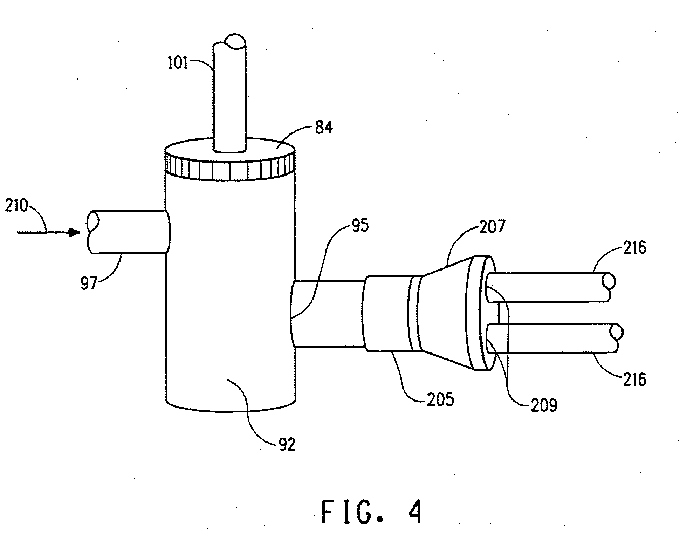

**FIGURE** 4 is a schematic illustration of a thermostatic expansion valve having a nozzle and a distributor. Liquid Circuit Line, 210, is coupled to the Inlet Port, 97, of the TXV Body, 92, having Diaphragm, 84, coupled to the sensing element, 101. TXV Body, 92, has Exit Port, 95. Coupled to the Exit Port, 95, is Nozzle, 205), which has Distributor, 207, coupled thereto. Distributor, 207, has two Distributor Exit Ports, 209, which are coupled to an Evaporator having two Evaporator Coils, 216.

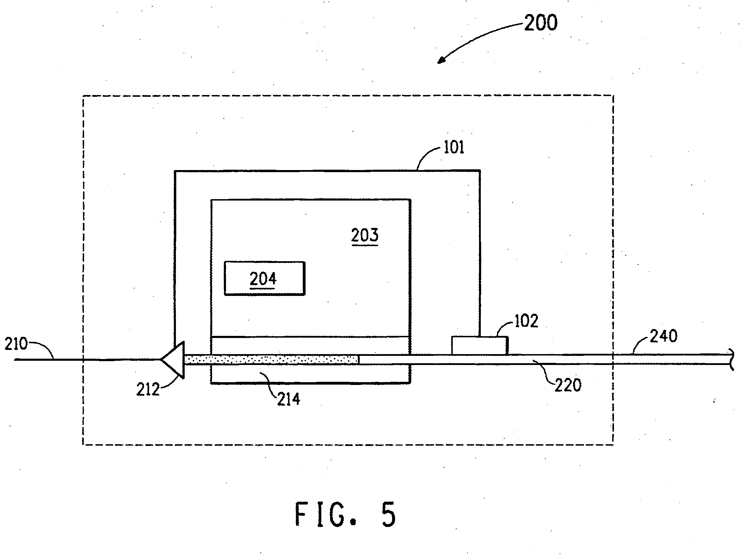

**FIGURE** 5 is a schematic illustration of refrigerant system using R22 and one of the above described compositions. This schematic illustrates a system, 200, that uses R22 in the sensing element, 101, and sensing bulb, 102. In this illustration, the area to be cooled, the temperature controlled zone, 203. The contents in the temperature controlled zone are shown by Contents, 204. The liquid refrigerant, 210, enters the R22 Expansion Valve, 212, and flows into the Evaporator, 214), where it expands and evaporates and exits the evaporator as a Superheated vapor, 220, and Suction Line, 240. In some embodiments no adjustment of the R22 Expansion Valve is required to accommodate the above described compositions in the evaporator. The condenser and compressor of such a system are not shown.

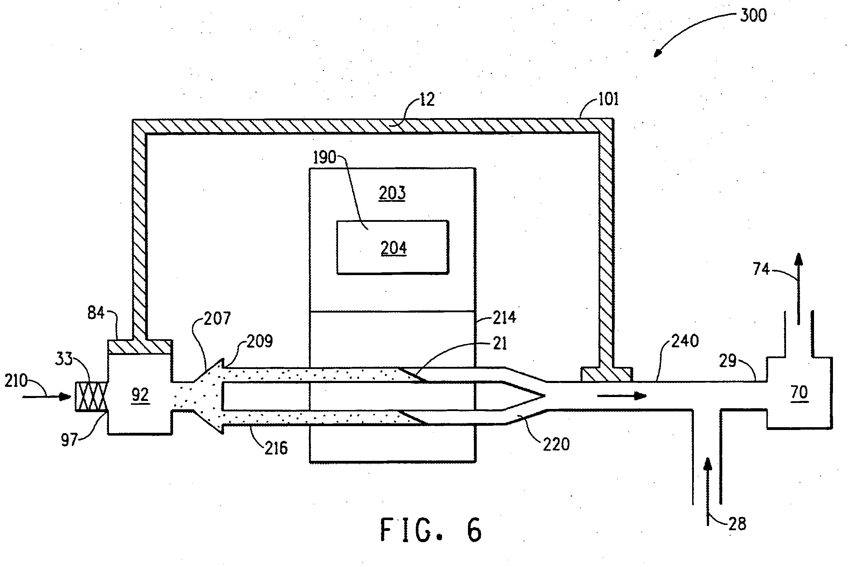

**FIGURE** 6 is a schematic illustration of another embodiment, System 300, of one embodiment of the disclosed heat transfer system, a refrigerant system, using both R22 and an above described composition. The liquid circuit line, 210, contains an above described composition, which enters the Valve Inlet Pipe, 33), into the Expansion Valve, 92), via the Valve Inlet Port, 97. The Expansion Valve, 92, includes Diaphragm, 84, coupled to the Sensing element, 101. The Expansion Valve has a Nozzle, 205, and Distributor, 207, coupled thereto. The Distributor, 207, has Distributor Exit Ports, 209, coupled to the Evaporator Coils, 216), where a portion of such coils is outside of the Evaporator, 214. The circulating above described composition is in two phases (liquid and gas) as it enters the Evaporator Coils, 216, reaches the saturated vapor condition as it exits the Evaporator, 214, and then undergoes superheating to become Superheated Vapor, 220. In some embodiments, the Superheat of the above described composition is no more than 5 °F (3 °C); in some embodiments, the Superheat of the above described composition is no more than 6 °F (3.5 °C); in some embodiments, the Superheat of the above described composition is no more than 7 °F (4 °C); in other embodiments, the Superheat of the above described composition is no more than 8 °F (4.5 °C); and in some embodiments, the superheat is no more than 10 °F (5.5 °C); in some embodiments, the Superheat of the above described composition is maintained between 10 and 15 °F (5.5 to 8.5 °C); in other embodiments the Superheat of the an above described composition is no more than 15 °F 8.5 °C); and in other embodiments the Superheat of the above described composition is no more than 20°F (11 °C). In some embodiments, the Superheat is maintained between 5 and 10 °F (3 to 5.5 °C) superheat.
   The Sensing bulb, 102), containing R22, senses the temperature of the Superheated Vapor communicates via pressure of the R22 in the Sensing element, 101), which is coupled to Diaphragm, 84, in the Expansion Valve, 92), as necessary, to allow additional liquid to flow or restrict the flow of an above described composition to enter into the Expansion Valve, 92. Superheated Vapor, 220, moves into Suction Line, 240, and meets the Vapor Circuit Line, 28. Vapor Circuit Line, 28, is coupled with other refrigeration systems, which may be the same or different as System 300. Vapor from one of the above described composition enters the Suction Header, 29, of the Compressor, 70. Compressor, 70, may be one or more compressors working together (e.g., a rack of Compressors), which may be the same type of compressors or different or may have same or different load capacities. After compressing the heated above described composition vapor the gas exits the Compressor and moves into the Vapor Circuit Line, 74, to the Condenser (not shown). Air is passed over the Evaporator coils via a fan or other mechanism (not shown). The above described composition in the Evaporator cools the air in the temperature Controlled Zone, 203, to the nominal desired temperature and cools Contents, 204, to the contents temperature, 190. The temperature of the Contents may be the same or different than that of the Temperature Controlled Zone. In some embodiments, no more than a ± 3 psig (20.7 kPa) adjustment of the R22 Expansion Valve is required to accommodate the above described composition in the evaporator.

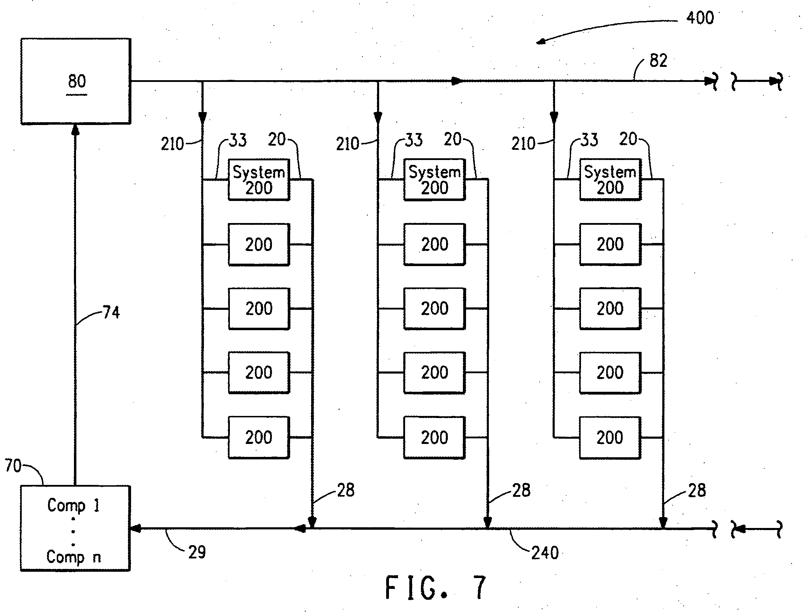

**FIGURE** 7 is a schematic illustration of another embodiment of a refrigerant system, System 400, using R22 and an above described composition in accordance with one embodiment of the heat transfer system described herein. This system is a larger system than Systems 200 and 300, and is an illustration of 15 Systems 200 coupled together and sharing a Liquid Refrigerant Trunk Line, 82, leading from Condenser, 80. Moreover, System 400 has 3 or more Liquid Refrigerant Circuit Lines, 210, each of which has at least 5 Systems 200 coupled thereto. Each System 200 has an Exit Line, 20), which is coupled to one of the multiple Vapor Circuit Line, 28), which in turn is coupled to the Suction Line, 240. The Suction Line is coupled to the Suction Header, 29, which is then coupled to the Compressor, 70. Compressor, 70, may be a single compressor or may also be a rack of two or more Compressors working in parallel or in series. In some embodiments, the system can have at least 4 circuit lines, at least 4 compressors, with as many as 20 temperature controlled zones coupled thereto.
   Each temperature controlled zones may be cooled by more than one evaporator each. In some systems, not all TXVs have distributors. And, in some systems, some TXVs will have distributors and others will not. In some embodiments no adjustment of the R22 Expansion Valve is required to accommodate the above described composition in the evaporator.

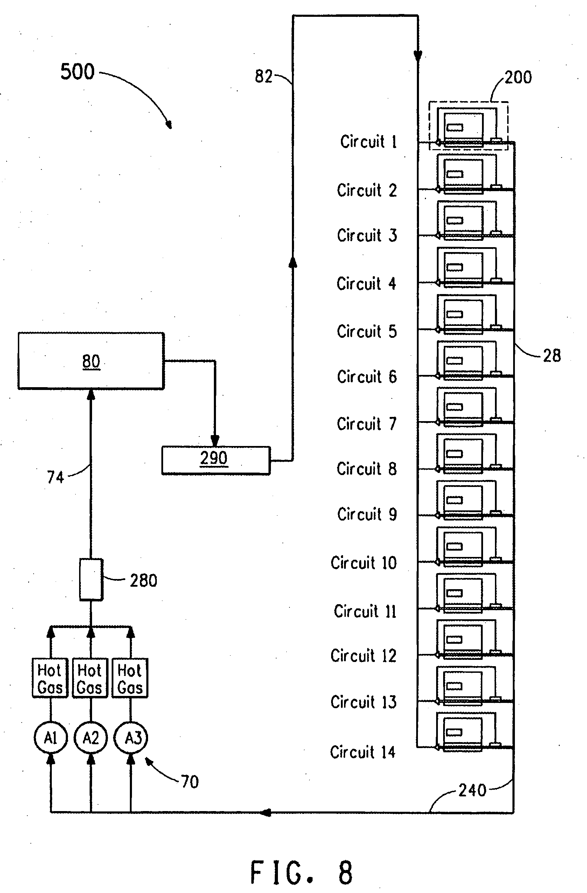

**FIGURE** 8 is a schematic of the refrigeration system, for one embodiment of the refrigeration system described herein. This system illustrates the further use of an Oil Separator, 280, and a Receiver, 290. In some embodiments no adjustment of the R22 Expansion Valve is required to accommodate the above described composition in the evaporator.

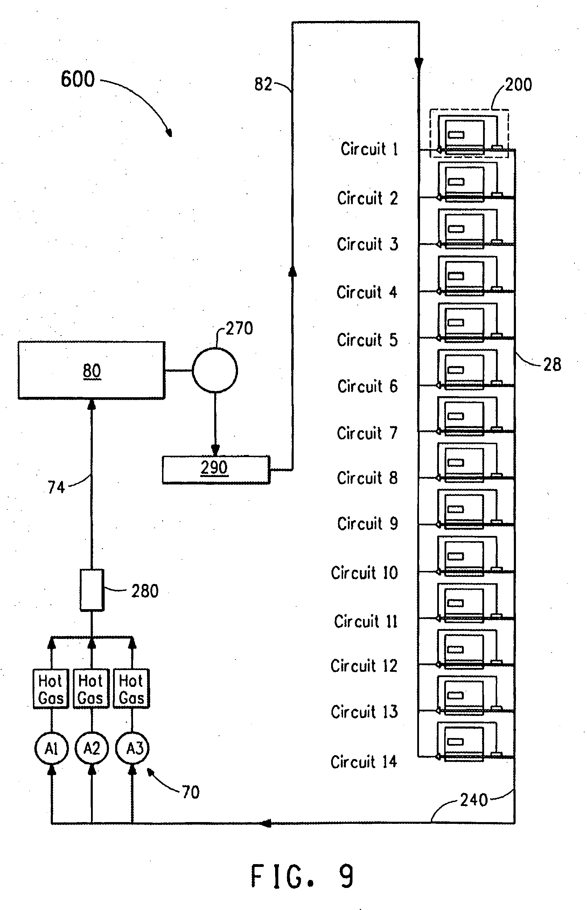

**FIGURE** 9 is a schematic of the refrigeration system, for one embodiment of the refrigeration system described herein. This system illustrates the further use of a Subcooler, 270. In some embodiments no adjustment of the R22 Expansion Valve is required to accommodate the above described composition in the evaporator.
**FIGURE** 10 is a schematic of a flooded chiller system wherein the liquid refrigerant composition resides in the evaporator, 214, and such chillers having a circulating vapor compositions as described herein. Vapor refrigerant circulates from the evaporator, through a suction line, 140, to a compressor, 70. The compressor is then coupled through a vapor refrigerant line, 120, to a condenser, 80.

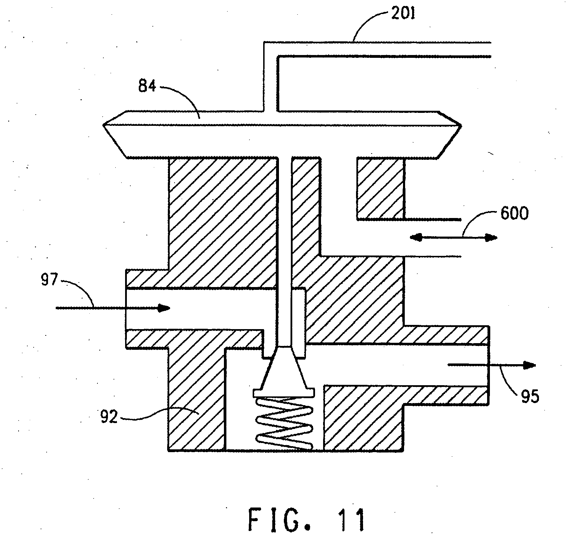

**FIGURE** 11 is a schematic illustration of a external equalizer, 600, coupled to a thermostatic expansion valve. The external equalizer, 600, is connected to the evaporator exit line, 20, (see Fig. 6). The evaporator pressure P2 is conveyed to the bottom of the diaphragm, 84, via the external equalizer. For a better understanding of this embodiment, the external equalizer P2 can be contrasted with internal equalizer, 86, (Figure 3).
**FIGURE** 12 is a schematic diagram of a direct expansion evaporator chiller which utilizes the refrigerant compositions of the present invention.

### EXAMPLES

The concepts described herein will be further described in the following examples, which do not limit the scope of the invention described in the claims.

### Calorimeter Performance Data

Calorimeter data at -25°F (-32°C) evaporator temperature (rating conditions for low temperature refrigeration conditions)

Refrigeration performance is demonstrated, as described in the Air-conditioning & Refrigeration Institute (ARI) Standard 540-2004, for the following specified conditions:

| | |
|---|---|
| Evaporator temperature | -25°F (-32°C) |
| Condenser temperature | 105°F (41 °C) |
| Return temperature (compressor suction) | 65°F (18°C) |
| Subcooling | 10°F (-12°C) |

Cooling capacity and energy efficiency (EER) are presented in the table below for a composition as described herein as compared to R22. The calorimeter performance data were based on the discus and reciprocating compressor rating sheets for R22 capacity and EER. In both cases, the laboratory systems lab calorimeter data for the present composition (Ex) were determined in the scroll compressor and compared with R22 performance based on the R22 capacity/EER values for the discus and the reciprocating compressor rating sheets.
The Ex composition is:

| | |
|---|---|
| R32 | 8.5 weight percent |
| R125 | 45 weight percent |
| R134a | 44.2 weight percent |
| n-butane | 1.7 weight percent |
| isopentane | 0.6 weight percent |

**TABLE 1**

| Compressor | Refrigeration Performance | | | |
|---|---|---|---|---|
| | | R22 | Ex | Ratio of Ex relative to R22 |
| discus | Cooling capacity (BTU/hr) {kW} | 19834 {5.81} | 21070 {6.17} | 1.06 |
| | EER | 5.17 | 5.78 | 1.12 |
| reciprocating | Cooling capacity (BTU/hr) {kW} | 19834 {5.81} | 21070 {6.17} | 1.06 |
| | EER | 4.96 | 5.78 | 1.17 |

### Calorimeter data at 20 °F (-7 °C) evaporator temperature (rating conditions for medium temperature refrigeration applications)

Refrigeration performance is demonstrated by the Air-conditioning & Refrigeration Institute (ARI) Standard 540 - 2004, for the following specified conditions:

| | |
|---|---|
| Evaporator temperature | 20°F (-7°C) |
| Condenser temperature | 120°F (9°C) |
| Return temperature (compressor suction) | 65°F (18°C) |
| Subcooling | 10°F (-12°C) |

Cooling capacity and energy efficiency (EER) are presented in the table below for a composition as described herein as compared to R22. The calorimeter performance data were based on the discus and reciprocating compressor rating sheets for R22 capacity and EER. In both cases, the laboratory systems lab calorimeter data for the present composition (Ex) were determined in the scroll compressor and compared with R22 performance based on the R22 capacity/EER values for the discus and the reciprocating compressor rating sheets. The Ex composition is:

| | |
|---|---|
| R32 | 8.5 weight percent |
| R125 | 45 weight percent |
| R134a | 44.2 weight percent |
| N-butane | 1.7 weight percent |
| Isopentane | 0.6 weight percent |

**TABLE 2**

| Compressor | Refrigeration Performance | | | |
|---|---|---|---|---|
| | | R22 | Ex | Ratio of Ex relative to R22 |
| discus | Cooling capacity (BTU/hr) {kW} | 63070 {18.5} | 60555 {17.7} | 0.96 |
| | EER | 9.22 | 9.48 | 1.03 |
| reciprocating | Cooling capacity (BTU/hr) {kW} | 61160 {17.9} | 60555 {17.7} | 0.99 |
| | EER | 9.05 | 9.48 | 1.05 |

### Flammability

Flammability may be determined for refrigerant classification by ASHRAE (American Society of Heating, Refrigerating and Air-Conditioning Engineers, Inc) as stated in ASHRAE Standard 34-2004. To receive a rating of "Al", the refrigerant must be non-toxic and non-flammable in both liquid and vapor phase. The worst case of formulation for flammability (WCF) is the nominal formulation, including the composition tolerances, that results in the most flammable concentration of components for a given mixture of refrigerant components. The composition produced during fractionation of the WCF that results in the highest concentration of flammable component(s) as identified in ASHRAE Standard 34-2004 in the vapor and liquid phase is the worst case of fractionation for flammability (WCFF). This must also be non-flammable in order to get the "Al" rating.

Estimation of flammability for compositions containing R125, R134a, R32, and hydrocarbons are found by calculating a total equivalent hydrocarbon (TEH) value (TEH = wt% hydrocarbon + 0.10* wt% R32). The "TEH" value for compositions, such as those described herein, that contain certain amounts of R125 are specified in U.S. Patent No. 6,783,691. For compositions containing about 60 weight percent R125, the TEH must be less than or equal to 4.7 % in order for the composition to be non-flammable. The table below shows the WCF (based upon composition described above) and the WCFF, and the TEH value for the Ex composition as listed in Table 1 as compared to another composition found in the art (all at -33 ° C, as designated by ASHRAE being 10 ° C above the boiling point).

**TABLE 3**

| Initial Composition | | Liquid WCF composition | Vapor WCFF composition | TEH value of WCFF |
|---|---|---|---|---|
| Ex = | | | | |
| R32 | 8.5 | 9 | 15.1 | 4.5 (nonflammable) |
| R125 | 45 | 43.5 | 58.9 | (less than 4.7%) |
| R134a | 44.2 | 45 | 23 | |
| n-butane | 1.7 | 1.8 | 2.65 | |
| isopentane | 0.6 | 0.7 | 0.35 | |
| Comparison | | | | |
| R32 | 10 | 10.5 | 17.2 | 5.0 (flammable) |
| R125 | 45 | 43.5 | 57.8 | (greater than 4.7%) |
| R134a | 42.5 | 43.3 | 21.7 | |
| n-butane | 2.0 | 2.1 | 3.0 | |
| isopentane | 0.5 | 0.6 | 0.3 | |

The TEH for the Ex composition WCFF being less than 4.7% indicates that this composition is non-flammable. Additionally, the TEH value for the comparison composition WCFF example being greater than 4.7% indicates that the composition to be flammable.

### Impact of Vapor Leakage

A vessel is charged with an initial composition at a temperature of 23 °C, and the initial vapor pressure of the composition is measured. The composition is allowed to leak from the vessel, while the temperature is held constant, until 50 weight percent of the initial composition is removed, at which time the vapor pressure of the composition remaining in the vessel is measured. Calculated results are shown in Table 4.

**TABLE 4**

| Composition (R32/R125/R134a/n-butane/isopentane) | **Initial Pressure (kPa)** | **Pressure After 50% Leak (kPa)** | **Change in pressure** (%) |
|---|---|---|---|
| 8.5/45/44.2/1.7/0.6 | 1053 | 963 | 8.5 |
| 9/44.21/44.3/1.8/0.7 | 1056 | 964 | 8.7 |
| 9/43.4/45.7/1.5/0.4 | 1051 | 958 | 8.8 |
| 7/46.5/44.6/1.5/0.4 | 1039 | 952 | 8.4 |
| 7/45/45.5/1.8/0.7 | 1030 | 942 | 8.5 |

The difference in vapor pressure between the original composition and the composition remaining after 50 weight percent is removed is less then about 10 percent for compositions of the present invention. This indicates that the compositions of the present invention would be azeotropic-like compositions.

## Claims

1. A heat transfer system capable of being coupled to at least one temperature controlled zone, the elements of the system comprising:
(i) at least one liquid refrigerant line;
(ii) at least one expansion valve suitable for use with R22 or a composition comprising: from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 -1.8 % n-butane and 0.4 - 0.7 % wt isopentane or 0.4-0.7 % wt n-pentane;
(iii) at least one evaporator;
(iv) at least one compressor;
(v) at least one condenser;
(vi) at least one vapor refrigerant line;
and wherein all of the elements have an inlet side and an outlet side and elements (i) through (vi) are in fluid communication together and contain a composition comprising from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 - 1.8 % n-butane and 0.4 - 0.7 % wt isopentane or 0.4-0.7 % wt n-pentane;
and the system further comprising at least one sensing element having two ends, wherein one end is communicatively coupled to an outlet side of at least one evaporator and one end is communicatively coupled to at least one expansion valve and the at least one sensing element contains a fluid suitable for use when R22 is used in the condenser-to-evaporator circuit.

2. The system according to Claim 1, further comprising: at least one expansion valve having a distributor.

3. The system according to Claim 1 wherein the system operated to accommodate the temperature controlled zone is a device selected from the group consisting of refrigerators, deli cases, produce display case, walk-in coolers, heat pumps, freezers, and air conditioners and combinations thereof.

4. The system according to Claim 1, wherein the system comprises at least two temperature controlled zones, at least two expansion valves and at least two evaporators.

5. A refrigerator, walk-in cooler, chiller, produce display case, freezer or air-conditioner equipment, having at least one evaporator, at least one distributor and at least one R22-suitable expansion valve, and at least one sensing element having a fluid suitable for use when R22 is used in the condenser-to-evaporator circuit, **characterised by** having the R22-suitable sensing element in combination with a composition comprising: from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 -1.8 % n-butane and 0.4 - 0.7 % wt isopentane or 0.4-0.7 % wt n-pentane in the condenser-to-evaporator circuit.

6. A method for retrofitting a heat transfer system having R22 in the condenser-to-evaporator circuit of the system, and having an R22 expansion valve, and having a sensing element having a fluid suitable for use when R22 is used in the condenser-to-evaporator circuit, said method comprising:
(i) removing R22 from the condenser-to-evaporator circuit of the system; and
(ii) charging the condenser-to-evaporator circuit of the system with a replacement composition having a saturated vapor pressure that is substantially the same as that of R22, which has at least 90% of the cooling capacity of R22, and does not increase the valve loading capacity beyond 130% of said R22 expansion valve,
wherein the replacement composition comprises: from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 -1.8 % n-butane and 0.4 - 0.7 % wt isopentane or 0.4-0.7 % wt n-pentane.

7. The method of Claim 6, further comprising replacing the fluid in the sensing element with the same refrigerant used in step (ii).

8. The method of Claim 6, the method further including replacing the expansion valve with an expansion valve selected for a composition comprising: from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 -1.8 % n-butane and 0.4 - 0.7 % wt isopentane or 0.4-0.7 % wt n-pentane.

9. A refrigeration or an air conditioning system capable of being coupled to at least one temperature controlled zone, the elements of the system comprising:
(i) at least one liquid refrigerant line;
(ii) at least one metering device selected from the group consisting of a thermostatic expansion valve, an electronic expansion valve, an automatic expansion device, a capillary valve, a float-type expansion valve and combinations thereof, and selected for use with a composition comprising: from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 -1.8 % n-butane and 0.4 - 0.7 % wt isopentane or 0.4-0.7 % wt n-pentane;
(iii) at least one evaporator;
(iv) at least one compressor;
(v) at least one condenser;
(vi) at least one vapor refrigerant line;
and wherein all of the elements have an inlet side and an outlet side and elements (i) through (vi) are in fluid communication together and contain a composition comprising: from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 -1.8 % n-butane and 0.4 - 0.7 % wt isopentane or 0.4-0.7 % wt n-pentane or R22;
and the system further comprising a sensing element having two ends, wherein one end of the sensing element is communicatively coupled to the exit side of the evaporator and the other end is communicatively coupled to at least one expansion valve having a composition comprising, from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 -1.8 % n-butane and 0.4 - 0.7 % wt isopentane or 0.4-0.7 % wt n-pentane in the sensing element.

10. The system of Claim 9, wherein the at least one metering device is at least one thermostatic expansion valve selected for use with R22.

11. The system of Claim 9, wherein the at least one metering devise comprises at least two thermostatic expansion valves and two sensing elements, and wherein at least one expansion valve is selected for use with R22 and one sensing element contains a fluid suitable for use when R22 is used in the condenser-to-evaporator circuit, and at least one other sensing element contains a composition comprising: from 7.0-9.0 % by weight difluoromethane; 39.0-50.0 % by weight pentafluoroethane; 39.0-50.0 % by weight 1,1,1,2-tetrafluoroethane; and 1.9 to 2.5 % by weight hydrocarbon, which consists essentially of 1.5 -1.8 % n-butane and 0.4 - 0.7 % wt isopentane or 0.4-0.7 % wt n-pentane.

## Patentansprüche

1. Wärmeübertragungssystem mit der Fähigkeit, an zumindest eine temperaturgeregelte Zone gekoppelt zu sein, wobei die Elemente des Systems umfassen:
(i) zumindest eine Flüssigkältemittelleitung;
(ii) zumindest ein Expansionsventil, geeignet zur Verwendung mit R22 oder einer Zusammensetzung, die umfasst: von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff, der im Wesentlichen aus 1,5-1,8% n-Butan und 0,4-0,7 Gew.-% Isopentan oder 0,4-0,7 Gew.-% n-Pentan besteht;
(iii) zumindest einen Verdampfer;
(iv) zumindest einen Kompressor;
(v) zumindest einen Kondensator;
(vi) zumindest eine Dampfkältemittelleitung;
und wobei alle der Elemente eine Einlassseite und eine Auslassseite aufweisen und Elemente (i) bis (vi) in fluider Kommunikation miteinander sind und eine Zusammensetzung enthalten, die von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff umfasst, der im Wesentlichen aus 1,5-1,8% n-Butan und 0,4-0,7 Gew.-% Isopentan oder 0,4-0,7 Gew.-% n-Pentan besteht;
und wobei das System weiterhin zumindest ein Sensorelement mit zwei Enden umfasst, wobei ein Ende kommunikativ an eine Auslassseite von zumindest einem Verdampfer gekoppelt ist und ein Ende kommunikativ an zumindest ein Expansionsventil gekoppelt ist und das zumindest eine Sensorelement ein Fluid enthält, das sich zur Verwendung eignet, wenn R22 im Kondensator-Verdampfer-Kreis benutzt wird.

2. System nach Anspruch 1, weiterhin umfassend: zumindest ein Expansionsventil mit einem Verteiler.

3. System nach Anspruch 1, wobei das System, betrieben zur Unterbringung der temperaturgeregelten Zone, eine Vorrichtung ist, ausgewählt aus der Gruppe, bestehend aus Kühlschränken, Kühlvitrinen, Produktpräsentationstheken, begehbaren Kühlzellen, Wärmepumpen, Tiefkühlgeräten und Klimaanlagen sowie Kombinationen davon.

4. System nach Anspruch 1, wobei das System zumindest zwei temperaturgeregelte Zonen, zumindest zwei Expansionsventile und zumindest zwei Verdampfer umfasst.

5. Kühlschrank-, Begehbare-Kühlzellen-, Kühler-, Produktpräsentationstheken-, Tiefkühlgerät- oder Klimaanlagen-Ausrüstung, mit zumindest einem Verdampfer, zumindest einem Verteiler und zumindest einem R22-geeigneten Expansionsventil, sowie zumindest einem Sensorelement mit einem Fluid, das sich zur Verwendung eignet, wenn R22 im Kondensator-Verdampfer-Kreis benutzt wird, **gekennzeichnet durch** Aufweisen des R22-geeigneten Sensorelements in Kombination mit einer Zusammensetzung, die umfasst: von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff, der im Wesentlichen aus 1,5-1,8% n-Butan und 0,4-0,7 Gew.-% Isopentan oder 0,4-0,7 Gew.-% n-Pentan besteht, im Kondensator-Verdampfer-Kreis.

6. Verfahren zur Nachrüstung eines Wärmeübertragungssystems, das R22 im Kondensator-Verdampfer-Kreis des Systems aufweist, und das ein R22-Expansionsventil aufweist, und das ein Sensorelement mit einem Fluid aufweist, das sich zur Verwendung eignet, wenn R22 im Kondensator-Verdampfer-Kreis benutzt wird, wobei das Verfahren umfasst:
(i) Entfernen von R22 aus dem Kondensator-Verdampfer-Kreis des Systems; und
(ii) Befüllen des Kondensator-Verdampfer-Kreises des Systems mit einer Ersatzzusammensetzung, die einen Sättigungsdampfdruck, der im Wesentlichen der gleiche ist wie jener von R22, aufweist, die zumindest 90% der Kühlkapazität von R22 aufweist, und die die Ventillastkapazität nicht über 130% des R22-Expansionsventils erhöht, wobei die Ersatzzusammensetzung umfasst: von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff, der im Wesentlichen aus 1,5-1,8% n-Butan und 0,4-0,7 Gew.-% Isopentan oder 0,4-0,7 Gew.-% n-Pentan besteht.

7. Verfahren nach Anspruch 6, weiterhin umfassend Ersetzen des Fluids im Sensorelement mit dem gleichen Kältemittel, das in Schritt (ii) verwendet wird.

8. Verfahren nach Anspruch 6, wobei das Verfahren weiterhin Ersetzen des Expansionsventils durch ein Expansionsventil einschließt, das für eine Zusammensetzung ausgewählt ist, die umfasst: von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff, der im Wesentlichen aus 1,5-1,8% n-Butan und 0,4-0,7 Gew.-% Isopentan oder 0,4-0,7 Gew.-% n-Pentan besteht.

9. Kühl- oder Klimasystem mit der Fähigkeit, an zumindest eine temperaturgeregelte Zone gekoppelt zu sein, wobei die Elemente des Systems umfassen:
(i) zumindest eine Flüssigkältemittelleitung;
(ii) zumindest eine Dosiervorrichtung, die ausgewählt ist aus der Gruppe, bestehend aus einem thermostatischen Expansionsventil, einem elektronischen Expansionsventil, einer automatischen Expansionsvorrichtung, einem Kapillarventil, einem Schwimmertyp-Expansionsventil und Kombinationen davon, und die ausgewählt ist zur Verwendung mit einer Zusammensetzung, die umfasst: von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff, der im Wesentlichen aus 1,5-1,8% n-Butan und 0,4-0,7 Gew.-% Isopentan oder 0,4-0,7 Gew.-% n-Pentan besteht;
(iii) zumindest einen Verdampfer;
(iv) zumindest einen Kompressor;
(v) zumindest einen Kondensator;
(vi) zumindest eine Dampfkältemittelleitung;
und wobei alle der Elemente eine Einlassseite und eine Auslassseite aufweisen und Elemente (i) bis (vi) in fluider Kommunikation miteinander sind und eine Zusammensetzung, die umfasst: von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff, der im Wesentlichen aus 1,5-1,8% n-Butan und 0,4-0,7 Gew.-% Isopentan oder 0,4-0,7 Gew.-% n-Pentan besteht, oder R22 enthalten;
und wobei das System weiterhin ein Sensorelement mit zwei Enden umfasst, wobei ein Ende des Sensorelements kommunikativ an die Ausgangsseite des Verdampfers gekoppelt ist und das andere Ende kommunikativ an zumindest ein Expansionsventil gekoppelt ist, mit einer Zusammensetzung, umfassend, von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff, der im Wesentlichen aus 1,5-1,8% n-Butan und 0,4-0,7 Gew.-% Isopentan oder 0,4-0,7 Gew.-% n-Pentan besteht, im Sensorelement.

10. System nach Anspruch 9, wobei die zumindest eine Dosiervorrichtung zumindest ein thermostatisches Expansionsventil, ausgewählt zur Verwendung mit R22, ist.

11. System nach Anspruch 9, wobei die zumindest eine Dosiervorrichtung zumindest zwei thermostatische Expansionsventile und zwei Sensorelemente umfasst, und wobei zumindest ein Expansionsventil zur Verwendung mit R22 ausgewählt ist und ein Sensorelement ein Fluid enthält, das sich zur Verwendung eignet, wenn R22 im Kondensator-Verdampfer-Kreis benutzt wird, und zumindest ein anderes Sensorelement eine Zusammensetzung enthält, die umfasst: von 7,0-9,0 Gew.-% Difluormethan; 39,0-50,0 Gew.-% Pentafluorethan; 39,0-50,0 Gew.-% 1,1,1,2-Tetrafluorethan; und 1,9 bis 2,5 Gew.-% Kohlenwasserstoff, der im Wesentlichen aus 1,5-1,8% n-Butan und 0,4-0,7 Gew.-% Isopentan oder 0,4-0,7 Gew.-% n-Pentan besteht.

## Revendications

1. Système de transfert de chaleur capable de couplage à au moins une zone à température contrôlée, les éléments du système comprenant:
(i) au moins une ligne de réfrigérant de liquide;
(ii) au moins un détendeur convenant à l'utilisation avec R22 ou une composition comprenant: de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5 % en poids d'hydrocarbure, qui consiste essentiellement en 1,5 à 1,8 % de *n-*butane et de 0,4 à 0,7 % en pds d'isopentane ou de 0,4 à 0,7 % en pds de *n*-pentane;
(iii) au moins un évaporateur;
(iv) au moins un compresseur;
(v) au moins un condensateur;
(vi) au moins une ligne de réfrigérant de vapeur;
et dans lequel tous les éléments présentent un côté orifice d'entrée et un côté orifice de sortie et les éléments (i) jusqu'à (vi) se trouvent en communication fluide ensemble et contiennent une composition comprenant de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5 % en poids d'hydrocarbure, qui consiste essentiellement en 1,5 à 1,8 % de *n*-butane et de 0,4 à 0,7 % en pds d'isopentane ou de 0,4 à 0,7 % en pds de *n*-pentane,
et le système comprenant en outre au moins un élément de détection présentant deux extrémités, où une extrémité est couplée de manière à pouvoir communiquer à un côté orifice de sortie d'au moins un évaporateur et une extrémité est couplée de manière à pouvoir communiquer à au moins un détendeur et le au moins un élément de détection contient un liquide convenant à l'utilisation lorsque du R22 est utilisé dans le circuit condensateur vers évaporateur.

2. Système selon la revendication 1, comprenant en outre: au moins un détendeur ayant un dispositif de distribution.

3. Système selon la revendication 1, dans lequel le système qui fonctionne pour loger la zone à température contrôlée est un dispositif sélectionné dans le groupe constitué des réfrigérateurs, des vitrines pour charcuterie, des vitrines pour présentation de produits, des chambres froides, des pompes à chaleur, des congélateurs, et des climatiseurs et leurs combinaisons.

4. Système selon la revendication 1, le système comprenant au moins deux zones à température contrôlée, au moins deux détendeurs et au moins deux évaporateurs.

5. Réfrigérateur, chambre froide, refroidisseur, vitrines de présentation de produits, équipement congélateur ou climatiseur, ayant au moins un évaporateur, au moins un distributeur et au moins un détendeur convenant pour R22, et au moins un élément de détection ayant un liquide convenant à l'utilisation lorsque du R22 est utilisé dans le circuit condensateur vers évaporateur, **caractérisé en ce qu'**il possède l'élément de détection convenant à R22 en combinaison avec une composition comprenant: de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5% en poids d'hydrocarbure, qui consiste essentiellement en 1,5 à 1,8 % de *n*-butane et de 0,4 à 0,7 % en pds d'isopentane ou de 0,4 à 0,7 % en pds de *n*-pentane dans le circuit condensateur vers évaporateur.

6. Procédé de rétro-ajustage d'un système de transfert de chaleur ayant du R22 dans le circuit condensateur vers évaporateur du système, et ayant un détendeur pour R22, et possédant un élément de détection ayant un liquide convenant à l'utilisation lorsque du R22 est utilisé dans le circuit condensateur vers évaporateur, ledit procédé comprenant:
(i) l'élimination de R22 du circuit condensateur vers évaporateur du système; et
(ii) la charge du circuit condensateur vers évaporateur du système avec une composition de substitution ayant une pression saturée en vapeur qui est sensiblement la même que celle de R22, qui présente au moins 90 % de la capacité de refroidissement de R22, et n'augmente pas la capacité de charge de la soupape au-delà de 130 % dudit détendeur de R22, où la composition de substitution comprend: de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5 % en poids d'hydrocarbure, qui consiste essentiellement en 1,5 à 1,8 % de *n*-butane et de 0,4 à 0,7 % en pds d'isopentane ou de 0,4 à 0,7 % en pds de *n*-pentane.

7. Procédé selon la revendication 6, comprenant en outre le remplacement du liquide dans l'élément de détection par le même agent réfrigérant que celui utilisé dans l'étape (ii).

8. Procédé selon la revendication 6, le procédé incluant en outre le remplacement du détendeur par un détendeur sélectionné pour une composition comprenant: de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5 % en poids d'hydrocarbure, qui consiste essentiellement en 1,5 à 1,8 % de *n*-butane et de 0,4 à 0,7 % en pds d'isopentane ou de 0,4 à 0,7 % en pds de *n*-pentane.

9. Système de réfrigération ou de climatisation capable de couplage à au moins une zone à température contrôlée, les éléments du système comprenant:
(i) au moins une ligne de réfrigérant liquide;
(ii) au moins un dispositif de mesure sélectionné dans le groupe constitué d'un détendeur thermostatique, d'un détendeur électronique, d'un dispositif d'expansion automatique, d'une vanne capillaire, d'un détendeur à flotteur et de leurs combinaisons, et sélectionné pour l'utilisation avec une composition comprenant: de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5 % en poids d'hydrocarbure, qui consiste essentiellement en 1,5 à 1,8 % de *n*-butane et de 0,4 à 0,7 % en pds d'isopentane ou de 0,4 à 0,7 % en pds de *n*-pentane;
(iii) au moins un évaporateur;
(iv) au moins un compresseur;
(v) au moins un condensateur;
(vi) au moins une ligne de réfrigérant de vapeur;
et dans lequel tous les éléments présentent un côté orifice d'entrée et un côté orifice de sortie et les éléments (i) jusqu'à (vi) se trouvent en communication fluide ensemble et contiennent une composition comprenant: de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5 % en poids d'hydrocarbure, qui consiste essentiellement en 1,5 à 1,8 % de *n*-butane et de 0,4 à 0,7 % en pds d'isopentane ou de 0,4 à 0,7 % en pds de *n*-pentane ou R22;
et le système comprenant en outre un élément de détection présentant deux extrémités, où une extrémité de l'élément de détection est couplée de manière à pouvoir communiquer à un côté orifice de sortie de l'évaporateur et l'autre extrémité est couplée de manière à pouvoir communiquer à au moins un détendeur ayant une composition comprenant, de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5 % en poids d'hydrocarbure, qui consiste essentiellement en 1,5 à 1,8 % de *n*-butane et de 0,4 à 0,7 % en pds d'isopentane ou de 0,4 à 0,7 % en pds de *n*-pentane dans l'élément de détection.

10. Système selon la revendication 9, dans lequel le au moins un dispositif de mesure est au moins un détendeur thermostatique sélectionné pour l'utilisation avec R22.

11. Système selon la revendication 9, dans lequel le au moins un dispositif de mesure comprend au moins deux détendeurs thermostatiques et deux éléments de détection, et dans lequel au moins un détendeur est sélectionné pour l'utilisation avec R22 et un élément de détection contient un liquide convenant à l'utilisation lorsque du R22 est utilisé dans le circuit condensateur vers évaporateur, et au moins un autre élément de détection contient une composition comprenant: de 7,0 à 9,0 % en poids de difluorométhane; de 39,0 à 50,0 % en poids de pentafluoroéthane; de 39,0 à 50,0 % en poids de 1,1,1,2-tétrafluoroéthane; et de 1,9 à 2,5 % en poids d'hydrocarbure, qui consiste essentiellement en 1,5 à 1,8 % de *n*-butane et de 0,4 à 0,7 % en pds d'isopentane ou de 0,4 à 0,7 % en pds de *n*-pentane.
